# EUROPEAN PATENT APPLICATION

(11) **EP 4 024 255 A1**
(43) Date of publication of application: **06.07.2022**
(21) Application number: 21208479.2
(22) Date of filing: 16.11.2021
(51) Int. Cl.: G06F 21/62, G06F 21/31, G06F 21/60, G06F 21/12

(54) **SYSTEMS AND METHODS FOR SECURING USER DEVICES**

(30) Priority: 29.12.2020 US 202017136705
(71) Applicant: Citrix Systems Inc., Fort Lauderdale, FL 33309 (US)
(72) Inventor: Singh, Manbinder Pal, Coral Springs (US); Gujarathi, Ashish, Parkland (US)
(74) Representative: Murgitroyd & Company

(57) **Abstract**

In one embodiment, a method includes: receiving an input by an application executable on a computing device, the application being presented in a first window displayable on the computing device and configured to provide access to another application, and the another application being displayable in a second window different than the first window; and providing by the application a message to the another application to modify access to content of the another application via the computing device in response to receipt of the input by the application, so as prevent display of the content within the second window of the computing device.

## Description

### BACKGROUND

Organizations such as companies, enterprises, governments, agencies, firms, associations, etc. may generate, store, and access confidential or other types of sensitive content in networked computing environments. For example, an organization may store confidential documents in cloud/network storage or access confidential information using one or more Software-as-a-Service (SaaS) or remote desktop applications. An organization may grant its employees, agents, partners, or other persons associated with organization (generally referred to as "end users" or "users") permission to access such applications. An end user may be required to authenticate themselves on a computing device (e.g., client/user device) before accessing the organization's applications and confidential information. For example, a user may unlock their mobile device using a personal identification number (PIN) or biometrics before accessing applications. As another example, a user may log into a desktop or laptop computer by entering a password before accessing applications. A user may be required to re-authenticate themselves after a period of inactivity.

### SUMMARY

After a user authenticates themselves on a computing device used to access their organization's applications, other persons may be permitted to use the device for special purposes on a limited-time basis. For example, a third-party technician may be invited to fix a problem or perform routine maintenance on an employee's device. As another example, an employee may allow a co-worker to access their laptop to assist with a work task. To allow such people access to the device, the employee (the "authenticated user") may first authenticate themselves and then hand over physical access of the device to the other person (the "unauthenticated user"). As another example, an employee that uses their personal device for work purposes (i.e., in a so-called "bring your own device" (BYOD) scenario), may handover the device to other family member while the employee had corporate applications opened on the device. This poses a risk as the unauthenticated user may have an opportunity to access the organization's confidential information for an illegitimate purpose, which present technologies do not address. In short, present technologies are an all or nothing proposition. Either a user has no access at all or has access to everything on a given device. This problem is further complicated by authorized users who give up physical control of their device to unauthorized users. Such a scenario completely defeats the security protections offered by present day authentication controls and solutions. Once given access, the unauthorized user has unfettered access to all documents and information for which the authorized user was granted access to. Authorized users can attempt to limit access by closing running applications on the device. However, it may be time-consuming for the authenticated user to save all of their work and then manually close, or logout of, each of the organization's applications before handing over the device to the unauthenticated user. Also, technologies such as password managers and two factor authentication applications still remain accessible to the unauthorized user and thus enable continued access to the authorized user's applications.

According to one aspect of the present disclosure, a method includes: receiving an input by an application executable on a computing device, the application being presented in a first window displayable on the computing device and configured to provide access to another application, and the another application being displayable in a second window different than the first window; and providing by the application a message to the another application to modify access to content of the another application via the computing device in response to receipt of the input by the application, so as to prevent display of the content within the second window of the computing device.

In some embodiments, the method can include modifying a display of the application within the first window to hide content of the application in response to receipt of the input. In some embodiments, the method can include detecting access to the computing device by a user not authenticated by the computing device, wherein the reception of the input by the application includes receiving a notification of the authenticated access. In some embodiments, the detection of the access to the computing device includes analyzing a pattern of user behavior to identify the user. In some embodiments, the detection of the access to the computing device includes using facial recognition to identify the user. In some embodiments, the modification of access to content of the another application includes overlaying one or more windows on the another application. In some embodiments, the modification of access to content of the another application includes disabling a virtual private network (VPN) connection used by the another application. In some embodiments, the VPN connection is a per-app VPN connection used by the another application.

In some embodiments, the providing of the message to the another application includes sending an inter-process communication (IPC) message from the application to the another application. In some embodiments, the method can include: generating a key for the another application; creating a named pipe having a path that includes the key; and sending IPC messages to the another application via the named pipe. In some embodiments, the method can include detecting access to the computing device by a user who is authenticated by the computing device; and allowing access to content of the another application in response to the detecting. In some embodiments, the allowing access to content of the another application includes: providing by the application another message to the another application to allow access to content of the another application.

According to one aspect of the disclosure, a method includes: receiving an input by an application executable on a computing device, the application being presented in a first window displayable on the computing device and configured to provide access to one or more other applications; and configuring, by the application, the computing device to prevent the one or more other applications from executing on the computing device in response to receipt of the input by the application, so as to prevent access to the one or more other applications.

In some embodiments, the method includes detecting access to the computing device by a user not authenticated by the computing device, wherein the receipt of the input by the application includes receiving a notification of the authenticated access. In some embodiments, the detection of the access to the computing device includes analyzing a pattern of user behavior to identify the user. In some embodiments, the detection of the access to the computing device includes using facial recognition to identify the user. In some embodiments, the configuration of the computing device to prevent the one or more other applications from executing includes intercepting a system call to create processes. In some embodiments, the method includes: detecting access to the computing device by a user who is authenticated by the computing device; and configuring, by the application, the computing device to allow the one or more other applications to execute on the computing device.

According to one aspect of the disclosure, an apparatus includes a processor and a non-volatile memory storing computer program code. The computer program code, when executed on the processor, causes the processor to execute a process operable to: receive an input by an application executable on a computing device, the application being presented in a first window displayable on the computing device and configured to provide access to another application, and the another application being displayable in a second window different than the first window; and provide by the application a message to the another application to modify access to content of the another application via the computing device in response to receipt of the input by the application, so as prevent display of the content within the second window of the computing device.

### BRIEF DESCRIPTION OF THE DRAWINGS

The manner of making and using the disclosed subject matter may be appreciated by reference to the detailed description in connection with the drawings, in which like reference numerals identify like elements.
FIG. 1 is a diagram illustrating an example network environment of computing devices in which various aspects of the disclosure may be implemented, in accordance with an embodiment of the present disclosure.
FIG. 2 is a block diagram illustrating selective components of an example computing device in which various aspects of the disclosure may be implemented, in accordance with an embodiment of the present disclosure.
FIG. 3 is a diagram of a cloud computing environment in which various aspects of the concepts described herein may be implemented.
FIG. 4A is a block diagram of an example system in which resource management services may manage and streamline access by clients to resource feeds (via one or more gateway services) and/or software-as-a-service (SaaS) applications.
FIG. 4B is a block diagram showing an example implementation of the system shown in FIG. 4A in which various resource management services as well as a gateway service are located within a cloud computing environment.
FIG. 4C is a block diagram similar to that shown in FIG. 4B but in which the available resources are represented by a single box labeled "systems of record," and further in which several different services are included among the resource management services.
FIG. 5 is a block diagram illustrating portions of a user device operable to modify access to one or more applications, according to disclosed embodiments.
FIG. 6 is a block diagram illustrating portions of a resource access application operable to modify access to one or more managed applications, according to disclosed embodiments.
FIG. 7 is a block diagram illustrating portions of a managed application for which access can modified according to disclosed embodiments.
FIGS. 8A-H are graphical diagrams illustrating techniques for modifying access to applications using an overlay window, according to disclosed embodiments.
FIGS. 9A and 9B are graphical diagrams illustrating a technique for modifying access to an application that uses a per-application virtual private network (VPN), according to disclosed embodiments.
FIG. 10 is a flow diagram showing a process for modifying access to one or more running applications, according to disclosed embodiments.
FIG. 11 is an interaction diagram illustrating how a resource access application can securely communicate with a managed application using inter-process communication (IPC), according to disclosed embodiments.
FIGS. 12A and 12B are block diagrams illustrating portions of a user device operable to modify access to an application by preventing instances of the application from launching, according to disclosed embodiments.

The drawings are not necessarily to scale, or inclusive of all elements of a system, emphasis instead generally being placed upon illustrating the systems and methods to be protected herein.

### DETAILED DESCRIPTION

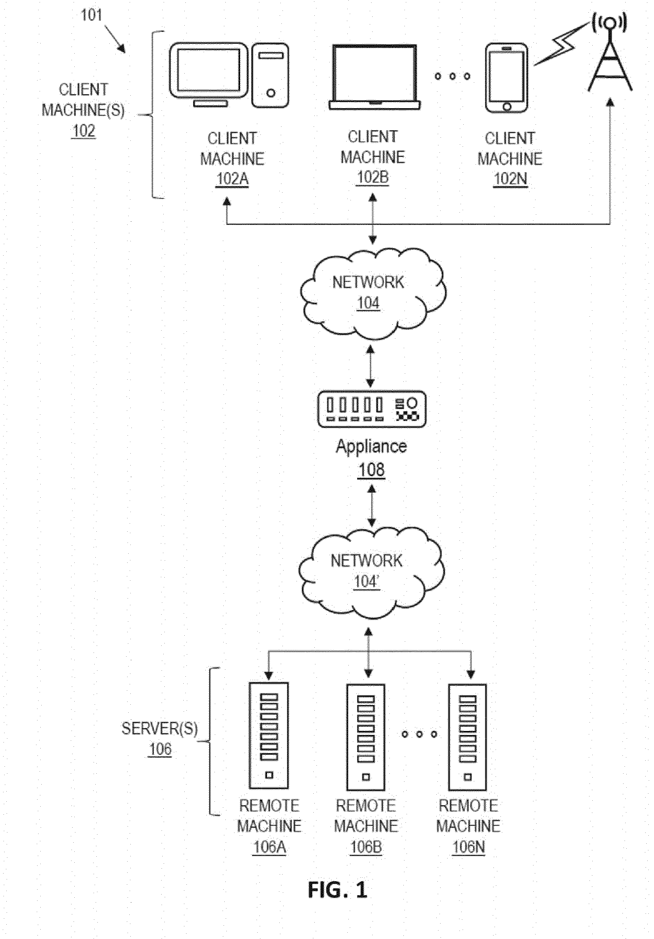

Referring now to FIG. 1, shown is an example network environment 101 of computing devices in which various aspects of the disclosure may be implemented, in accordance with an embodiment of the present disclosure. As shown, environment 101 includes one or more client machines 102A-102N, one or more remote machines 106A-106N, one or more networks 104, 104', and one or more appliances 108 installed within environment 101. Client machines 102A-102N communicate with remote machines 106A-106N via networks 104, 104'.

In some embodiments, client machines 102A-102N communicate with remote machines 106A-106N via an intermediary appliance 108. The illustrated appliance 108 is positioned between networks 104, 104' and may also be referred to as a network interface or gateway. In some embodiments, appliance 108 may operate as an application delivery controller (ADC) to provide clients with access to business applications and other data deployed in a datacenter, a cloud computing environment, or delivered as Software as a Service (SaaS) across a range of client devices, and/or provide other functionality such as load balancing, etc. In some embodiments, multiple appliances 108 may be used, and appliance(s) 108 may be deployed as part of network 104 and/or 104'.

Client machines 102A-102N may be generally referred to as client machines 102, local machines 102, clients 102, client nodes 102, client computers 102, client devices 102, computing devices 102, endpoints 102, or endpoint nodes 102. Remote machines 106A-106N may be generally referred to as servers 106 or a server farm 106. In some embodiments, a client device 102 may have the capacity to function as both a client node seeking access to resources provided by server 106 and as a server 106 providing access to hosted resources for other client devices 102A-102N. Networks 104, 104' may be generally referred to as a network 104. Networks 104 may be configured in any combination of wired and wireless networks.

Server 106 may be any server type such as, for example: a file server; an application server; a web server; a proxy server; an appliance; a network appliance; a gateway; an application gateway; a gateway server; a virtualization server; a deployment server; a Secure Sockets Layer Virtual Private Network (SSL VPN) server; a firewall; a web server; a server executing an active directory; a cloud server; or a server executing an application acceleration program that provides firewall functionality, application functionality, or load balancing functionality.

Server 106 may execute, operate or otherwise provide an application that may be any one of the following: software; a program; executable instructions; a virtual machine; a hypervisor; a web browser; a web-based client; a client-server application; a thin-client computing client; an ActiveX control; a Java applet; software related to voice over internet protocol (VoIP) communications like a soft IP telephone; an application for streaming video and/or audio; an application for facilitating real-time-data communications; a HTTP client; a FTP client; an Oscar client; a Telnet client; or any other set of executable instructions.

In some embodiments, server 106 may execute a remote presentation services program or other program that uses a thin-client or a remote-display protocol to capture display output generated by an application executing on server 106 and transmit the application display output to client device 102.

In yet other embodiments, server 106 may execute a virtual machine providing, to a user of client device 102, access to a computing environment. Client device 102 may be a virtual machine. The virtual machine may be managed by, for example, a hypervisor, a virtual machine manager (VMM), or any other hardware virtualization technique within server 106.

In some embodiments, network 104 may be: a local-area network (LAN); a metropolitan area network (MAN); a wide area network (WAN); a primary public network; and a primary private network. Additional embodiments may include a network 104 of mobile telephone networks that use various protocols to communicate among mobile devices. For short range communications within a wireless local-area network (WLAN), the protocols may include 802.11, Bluetooth, and Near Field Communication (NFC).

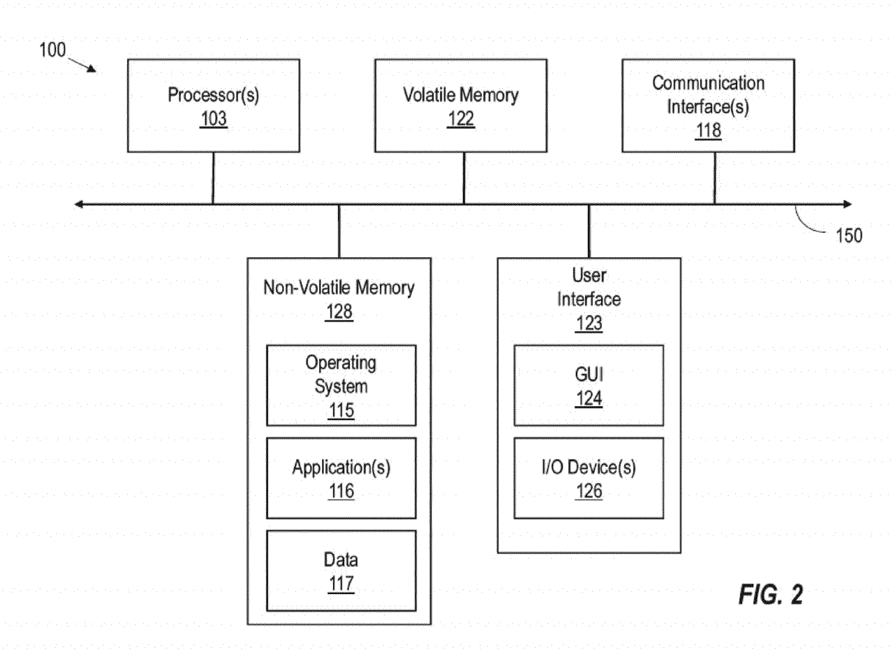

FIG. 2 is a block diagram illustrating selective components of an example computing device 100 in which various aspects of the disclosure may be implemented, in accordance with an embodiment of the present disclosure. For instance, client devices 102, appliances 108, and/or servers 106 of FIG. 1 can be substantially similar to computing device 100. As shown, computing device 100 includes one or more processors 103, a volatile memory 122 (e.g., random access memory (RAM)), a non-volatile memory 128, a user interface (UI) 123, one or more communications interfaces 118, and a communications bus 150.

Non-volatile memory 128 may include: one or more hard disk drives (HDDs) or other magnetic or optical storage media; one or more solid state drives (SSDs), such as a flash drive or other solid-state storage media; one or more hybrid magnetic and solid-state drives; and/or one or more virtual storage volumes, such as a cloud storage, or a combination of such physical storage volumes and virtual storage volumes or arrays thereof.

User interface 123 may include a graphical user interface (GUI) 124 (e.g., a touchscreen, a display, etc.) and one or more input/output (I/O) devices 126 (e.g., a mouse, a keyboard, a microphone, one or more speakers, one or more cameras, one or more biometric scanners, one or more environmental sensors, and one or more accelerometers, etc.).

Non-volatile memory 128 stores an operating system 115, one or more applications 116, and data 117 such that, for example, computer instructions of operating system 115 and/or applications 116 are executed by processor(s) 103 out of volatile memory 122. In some embodiments, volatile memory 122 may include one or more types of RAM and/or a cache memory that may offer a faster response time than a main memory. Data may be entered using an input device of GUI 124 or received from I/O device(s) 126. Various elements of computing device 100 may communicate via communications bus 150.

The illustrated computing device 100 is shown merely as an example client device or server and may be implemented by any computing or processing environment with any type of machine or set of machines that may have suitable hardware and/or software capable of operating as described herein.

Processor(s) 103 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A processor may perform the function, operation, or sequence of operations using digital values and/or using analog signals.

In some embodiments, the processor can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory.

Processor 103 may be analog, digital or mixed-signal. In some embodiments, processor 103 may be one or more physical processors, or one or more virtual (e.g., remotely located or cloud computing environment) processors. A processor including multiple processor cores and/or multiple processors may provide functionality for parallel, simultaneous execution of instructions or for parallel, simultaneous execution of one instruction on more than one piece of data.

Communications interfaces 118 may include one or more interfaces to enable computing device 100 to access a computer network such as a Local Area Network (LAN), a Wide Area Network (WAN), a Personal Area Network (PAN), or the Internet through a variety of wired and/or wireless connections, including cellular connections.

In described embodiments, computing device 100 may execute an application on behalf of a user of a client device. For example, computing device 100 may execute one or more virtual machines managed by a hypervisor. Each virtual machine may provide an execution session within which applications execute on behalf of a user or a client device, such as a hosted desktop session. Computing device 100 may also execute a terminal services session to provide a hosted desktop environment. Computing device 100 may provide access to a remote computing environment including one or more applications, one or more desktop applications, and one or more desktop sessions in which one or more applications may execute.

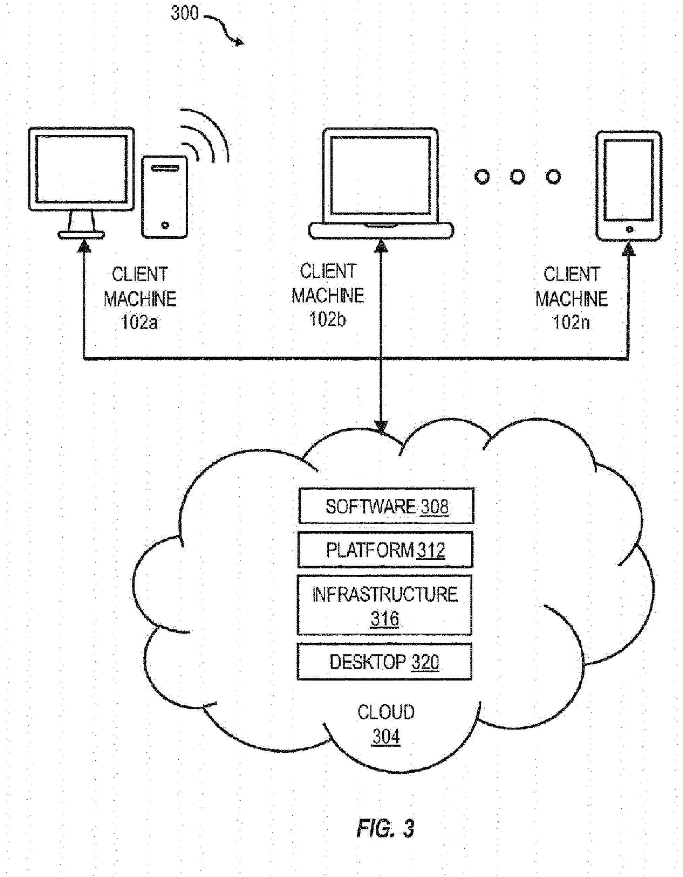

Referring to FIG. 3, a cloud computing environment 300 is depicted, which may also be referred to as a cloud environment, cloud computing or cloud network. The cloud computing environment 300 can provide the delivery of shared computing services and/or resources to multiple users or tenants. For example, the shared resources and services can include, but are not limited to, networks, network bandwidth, servers, processing, memory, storage, applications, virtual machines, databases, software, hardware, analytics, and intelligence.

In the cloud computing environment 300, one or more clients 102a-102n (such as those described above) are in communication with a cloud network 304. The cloud network 304 may include back-end platforms, e.g., servers, storage, server farms or data centers. The users or clients 102a-102n can correspond to a single organization/tenant or multiple organizations/tenants. More particularly, in one example implementation the cloud computing environment 300 may provide a private cloud serving a single organization (e.g., enterprise cloud). In another example, the cloud computing environment 300 may provide a community or public cloud serving multiple organizations/tenants.

In some embodiments, a gateway appliance(s) or service may be utilized to provide access to cloud computing resources and virtual sessions. By way of example, Citrix Gateway, provided by Citrix Systems, Inc., may be deployed on-premises or on public clouds to provide users with secure access and single sign-on to virtual, SaaS and web applications. Furthermore, to protect users from web threats, a gateway such as Citrix Secure Web Gateway may be used. Citrix Secure Web Gateway uses a cloud-based service and a local cache to check for URL reputation and category.

In still further embodiments, the cloud computing environment 300 may provide a hybrid cloud that is a combination of a public cloud and a private cloud. Public clouds may include public servers that are maintained by third parties to the clients 102a-102n or the enterprise/tenant. The servers may be located off-site in remote geographical locations or otherwise.

The cloud computing environment 300 can provide resource pooling to serve multiple users via clients 102a-102n through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the cloud computing environment 300 can provide on-demand self-service to unilaterally provision computing capabilities (e.g., server time, network storage) across a network for multiple clients 102a-102n. By way of example, provisioning services may be provided through a system such as Citrix Provisioning Services (Citrix PVS). Citrix PVS is a software-streaming technology that delivers patches, updates, and other configuration information to multiple virtual desktop endpoints through a shared desktop image. The cloud computing environment 300 can provide an elasticity to dynamically scale out or scale in response to different demands from one or more clients 102. In some embodiments, the cloud computing environment 300 can include or provide monitoring services to monitor, control and/or generate reports corresponding to the provided shared services and resources.

In some embodiments, the cloud computing environment 300 may provide cloud-based delivery of different types of cloud computing services, such as Software as a service (SaaS) 308, Platform as a Service (PaaS) 312, Infrastructure as a Service (IaaS) 316, and Desktop as a Service (DaaS) 320, for example. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, Google Compute Engine provided by Google Inc. of Mountain View, California, or RIGHTSCALE provided by RightScale, Inc., of Santa Barbara, California.

PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California.

SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g. Citrix ShareFile from Citrix Systems, DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Similar to SaaS, DaaS (which is also known as hosted desktop services) is a form of virtual desktop infrastructure (VDI) in which virtual desktop sessions are typically delivered as a cloud service along with the apps used on the virtual desktop. Citrix Cloud from Citrix Systems is one example of a DaaS delivery platform. DaaS delivery platforms may be hosted on a public cloud computing infrastructure such as AZURE CLOUD from Microsoft Corporation of Redmond, Washington (herein "Azure"), or AMAZON WEB SERVICES provided by Amazon.com, Inc., of Seattle, Washington (herein "AWS"), for example. In the case of Citrix Cloud, Citrix Workspace app may be used as a single-entry point for bringing apps, files and desktops together (whether on-premises or in the cloud) to deliver a unified experience.

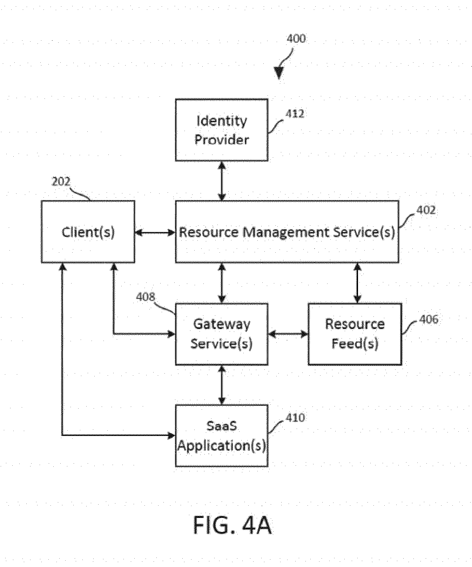

FIG. 4A is a block diagram of an example system 400 in which one or more resource management services 402 may manage and streamline access by one or more clients 202 to one or more resource feeds 406 (via one or more gateway services 408) and/or one or more software-as-a-service (SaaS) applications 410. In particular, the resource management service(s) 402 may employ an identity provider 412 to authenticate the identity of a user of a client 202 and, following authentication, identify one of more resources the user is authorized to access. In response to the user selecting one of the identified resources, the resource management service(s) 402 may send appropriate access credentials to the requesting client 202, and the client 202 may then use those credentials to access the selected resource. For the resource feed(s) 406, the client 202 may use the supplied credentials to access the selected resource via a gateway service 408. For the SaaS application(s) 410, the client 202 may use the credentials to access the selected application directly.

The client(s) 202 may be any type of computing devices capable of accessing the resource feed(s) 406 and/or the SaaS application(s) 410, and may, for example, include a variety of desktop or laptop computers, smartphones, tablets, etc. The resource feed(s) 406 may include any of numerous resource types and may be provided from any of numerous locations. In some embodiments, for example, the resource feed(s) 406 may include one or more systems or services for providing virtual applications and/or desktops to the client(s) 202, one or more file repositories and/or file sharing systems, one or more secure browser services, one or more access control services for the SaaS applications 410, one or more management services for local applications on the client(s) 202, one or more internet enabled devices or sensors, etc. Each of the resource management service(s) 402, the resource feed(s) 406, the gateway service(s) 408, the SaaS application(s) 410, and the identity provider 412 may be located within an on-premises data center of an organization for which the system 400 is deployed, within one or more cloud computing environments, or elsewhere.

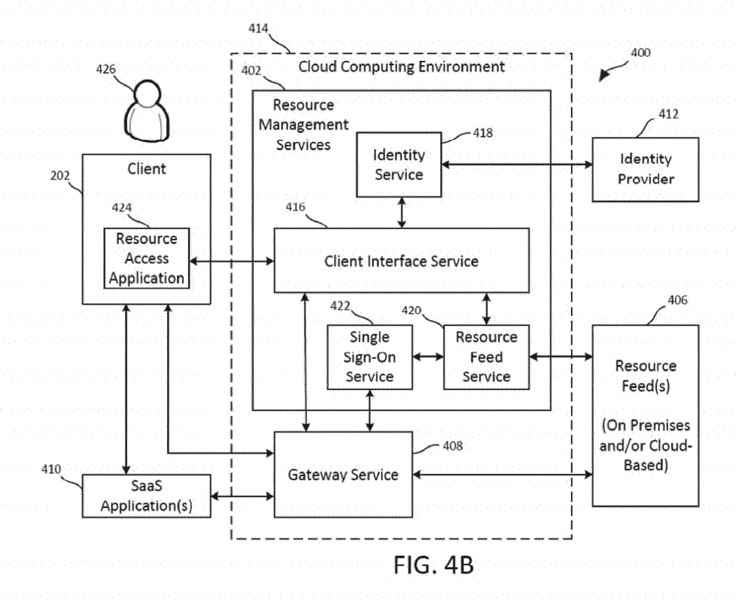

FIG. 4B is a block diagram showing an example implementation of the system 400 shown in FIG. 4A in which various resource management services 402 as well as a gateway service 408 are located within a cloud computing environment 414. The cloud computing environment may, for example, include Microsoft Azure Cloud, Amazon Web Services, Google Cloud, or IBM Cloud.

For any of illustrated components (other than the client 202) that are not based within the cloud computing environment 414, cloud connectors (not shown in FIG. 4B) may be used to interface those components with the cloud computing environment 414. Such cloud connectors may, for example, run on Windows Server instances hosted in resource locations and may create a reverse proxy to route traffic between the site(s) and the cloud computing environment 414. In the illustrated example, the cloud-based resource management services 402 include a client interface service 416, an identity service 418, a resource feed service 420, and a single sign-on service 422. As shown, in some embodiments, the client 202 may use a resource access application 424 to communicate with the client interface service 416 as well as to present a user interface on the client 202 that a user 426 can operate to access the resource feed(s) 406 and/or the SaaS application(s) 410. The resource access application 424 may either be installed on the client 202, or may be executed by the client interface service 416 (or elsewhere in the system 400) and accessed using a web browser (not shown in FIG. 4B) on the client 202.

As explained in more detail below, in some embodiments, the resource access application 424 and associated components may provide the user 426 with a personalized, all-in-one interface enabling instant and seamless access to all the user's SaaS and web applications, files, virtual Windows applications, virtual Linux applications, desktops, mobile applications, Citrix Virtual Apps and Desktops^{™}, local applications, and other data.

When the resource access application 424 is launched or otherwise accessed by the user 426, the client interface service 416 may send a sign-on request to the identity service 418. In some embodiments, the identity provider 412 may be located on the premises of the organization for which the system 400 is deployed. The identity provider 412 may, for example, correspond to an on-premises Windows Active Directory. In such embodiments, the identity provider 412 may be connected to the cloud-based identity service 418 using a cloud connector (not shown in FIG. 4B), as described above. Upon receiving a sign-on request, the identity service 418 may cause the resource access application 424 (via the client interface service 416) to prompt the user 426 for the user's authentication credentials (e.g., user-name and password). Upon receiving the user's authentication credentials, the client interface service 416 may pass the credentials along to the identity service 418, and the identity service 418 may, in turn, forward them to the identity provider 412 for authentication, for example, by comparing them against an Active Directory domain. Once the identity service 418 receives confirmation from the identity provider 412 that the user's identity has been properly authenticated, the client interface service 416 may send a request to the resource feed service 420 for a list of subscribed resources for the user 426.

In other embodiments (not illustrated in FIG. 4B), the identity provider 412 may be a cloud-based identity service, such as a Microsoft Azure Active Directory. In such embodiments, upon receiving a sign-on request from the client interface service 416, the identity service 418 may, via the client interface service 416, cause the client 202 to be redirected to the cloud-based identity service to complete an authentication process. The cloud-based identity service may then cause the client 202 to prompt the user 426 to enter the user's authentication credentials. Upon determining the user's identity has been properly authenticated, the cloud-based identity service may send a message to the resource access application 424 indicating the authentication attempt was successful, and the resource access application 424 may then inform the client interface service 416 of the successfully authentication. Once the identity service 418 receives confirmation from the client interface service 416 that the user's identity has been properly authenticated, the client interface service 416 may send a request to the resource feed service 420 for a list of subscribed resources for the user 426.

For each configured resource feed, the resource feed service 420 may request an identity token from the single sign-on service 422. The resource feed service 420 may then pass the feed-specific identity tokens it receives to the points of authentication for the respective resource feeds 406. Each resource feed 406 may then respond with a list of resources configured for the respective identity. The resource feed service 420 may then aggregate all items from the different feeds and forward them to the client interface service 416, which may cause the resource access application 424 to present a list of available resources on a user interface of the client 202. The list of available resources may, for example, be presented on the user interface of the client 202 as a set of selectable icons or other elements corresponding to accessible resources. The resources so identified may, for example, include one or more virtual applications and/or desktops (e.g., Citrix Virtual Apps and Desktops^{™}, VMware Horizon, Microsoft RDS, etc.), one or more file repositories and/or file sharing systems (e.g., Sharefile^{®}, one or more secure browsers, one or more internet enabled devices or sensors, one or more local applications installed on the client 202, and/or one or more SaaS applications 410 to which the user 426 has subscribed. The lists of local applications and the SaaS applications 410 may, for example, be supplied by resource feeds 406 for respective services that manage which such applications are to be made available to the user 426 via the resource access application 424. Examples of SaaS applications 410 that may be managed and accessed as described herein include Microsoft Office 365 applications, SAP SaaS applications, Workday applications, etc.

For resources other than local applications and the SaaS application(s) 410, upon the user 426 selecting one of the listed available resources, the resource access application 424 may cause the client interface service 416 to forward a request for the specified resource to the resource feed service 420. In response to receiving such a request, the resource feed service 420 may request an identity token for the corresponding feed from the single sign-on service 422. The resource feed service 420 may then pass the identity token received from the single sign-on service 422 to the client interface service 416 where a launch ticket for the resource may be generated and sent to the resource access application 424. Upon receiving the launch ticket, the resource access application 424 may initiate a secure session to the gateway service 408 and present the launch ticket. When the gateway service 408 is presented with the launch ticket, it may initiate a secure session to the appropriate resource feed and present the identity token to that feed to seamlessly authenticate the user 426. Once the session initializes, the client 202 may proceed to access the selected resource.

When the user 426 selects a local application, the resource access application 424 may cause the selected local application to launch on the client 202. When the user 426 selects a SaaS application 410, the resource access application 424 may cause the client interface service 416 request a one-time uniform resource locator (URL) from the gateway service 408 as well a preferred browser for use in accessing the SaaS application 410. After the gateway service 408 returns the one-time URL and identifies the preferred browser, the client interface service 416 may pass that information along to the resource access application 424. The client 202 may then launch the identified browser and initiate a connection to the gateway service 408. The gateway service 408 may then request an assertion from the single sign-on service 422. Upon receiving the assertion, the gateway service 408 may cause the identified browser on the client 202 to be redirected to the logon page for identified SaaS application 410 and present the assertion. The SaaS may then contact the gateway service 408 to validate the assertion and authenticate the user 426. Once the user has been authenticated, communication may occur directly between the identified browser and the selected SaaS application 410, thus allowing the user 426 to use the client 202 to access the selected SaaS application 410.

In some embodiments, the preferred browser identified by the gateway service 408 may be a specialized browser embedded in the resource access application 424 (when the resource application is installed on the client 202) or provided by one of the resource feeds 406 (when the resource application 424 is located remotely), e.g., via a secure browser service. In such embodiments, the SaaS applications 410 may incorporate enhanced security policies to enforce one or more restrictions on the embedded browser. Examples of such policies include (1) requiring use of the specialized browser and disabling use of other local browsers, (2) restricting clipboard access, e.g., by disabling cut/copy/paste operations between the application and the clipboard, (3) restricting printing, e.g., by disabling the ability to print from within the browser, (3) restricting navigation, e.g., by disabling the next and/or back browser buttons, (4) restricting downloads, e.g., by disabling the ability to download from within the SaaS application, and (5) displaying watermarks, e.g., by overlaying a screen-based watermark showing the username and IP address associated with the client 202 such that the watermark will appear as displayed on the screen if the user tries to print or take a screenshot. Further, in some embodiments, when a user selects a hyperlink within a SaaS application, the specialized browser may send the URL for the link to an access control service (e.g., implemented as one of the resource feed(s) 406) for assessment of its security risk by a web filtering service. For approved URLs, the specialized browser may be permitted to access the link. For suspicious links, however, the web filtering service may have the client interface service 416 send the link to a secure browser service, which may start a new virtual browser session with the client 202, and thus allow the user to access the potentially harmful linked content in a safe environment.

In some embodiments, in addition to or in lieu of providing the user 426 with a list of resources that are available to be accessed individually, as described above, the user 426 may instead be permitted to choose to access a streamlined feed of event notifications and/or available actions that may be taken with respect to events that are automatically detected with respect to one or more of the resources. This streamlined resource activity feed, which may be customized for each user 426, may allow users to monitor important activity involving all of their resources-SaaS applications, web applications, Windows applications, Linux applications, desktops, file repositories and/or file sharing systems, and other data through a single interface, without needing to switch context from one resource to another. Further, event notifications in a resource activity feed may be accompanied by a discrete set of user-interface elements, e.g., "approve," "deny," and "see more detail" buttons, allowing a user to take one or more simple actions with respect to each event right within the user's feed. In some embodiments, such a streamlined, intelligent resource activity feed may be enabled by one or more micro-applications, or "microapps," that can interface with underlying associated resources using APIs or the like. The responsive actions may be user-initiated activities that are taken within the microapps and that provide inputs to the underlying applications through the API or other interface. The actions a user performs within the microapp may, for example, be designed to address specific common problems and use cases quickly and easily, adding to increased user productivity (e.g., request personal time off, submit a help desk ticket, etc.). In some embodiments, notifications from such event-driven microapps may additionally or alternatively be pushed to clients 202 to notify a user 426 of something that requires the user's attention (e.g., approval of an expense report, new course available for registration, etc.).

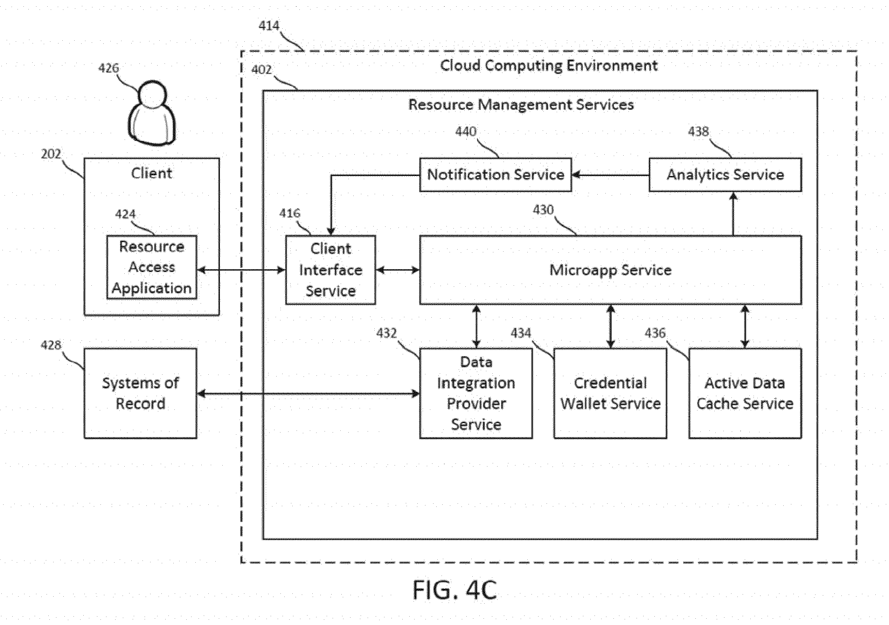

FIG. 4C is a block diagram similar to that shown in FIG. 4B but in which the available resources (e.g., SaaS applications, web applications, Windows applications, Linux applications, desktops, file repositories and/or file sharing systems, and other data) are represented by a single box 428 labeled "systems of record," and further in which several different services are included within the resource management services block 402. As explained below, the services shown in FIG. 4C may enable the provision of a streamlined resource activity feed and/or notification process for a client 202. In the example shown, in addition to the client interface service 416 discussed above, the illustrated services include a microapp service 430, a data integration provider service 432, a credential wallet service 434, an active data cache service 436, an analytics service 438, and a notification service 440. In various embodiments, the services shown in FIG. 4C may be employed either in addition to or instead of the different services shown in FIG. 4B.

In some embodiments, a microapp may be a single use case made available to users to streamline functionality from complex enterprise applications. Microapps may, for example, utilize APIs available within SaaS, web, or home-grown applications allowing users to see content without needing a full launch of the application or the need to switch context. Absent such microapps, users would need to launch an application, navigate to the action they need to perform, and then perform the action. Microapps may streamline routine tasks for frequently performed actions and provide users the ability to perform actions within the resource access application 424 without having to launch the native application. The system shown in FIG. 4C may, for example, aggregate relevant notifications, tasks, and insights, and thereby give the user 426 a dynamic productivity tool. In some embodiments, the resource activity feed may be intelligently populated by utilizing machine learning and artificial intelligence (AI) algorithms. Further, in some implementations, microapps may be configured within the cloud computing environment 414, thus giving administrators a powerful tool to create more productive workflows, without the need for additional infrastructure. Whether pushed to a user or initiated by a user, microapps may provide short cuts that simplify and streamline key tasks that would otherwise require opening full enterprise applications. In some embodiments, out-of-the-box templates may allow administrators with API account permissions to build microapp solutions targeted for their needs. Administrators may also, in some embodiments, be provided with the tools they need to build custom microapps.

Referring to FIG. 4C, the systems of record 428 may represent the applications and/or other resources the resource management services 402 may interact with to create microapps. These resources may be SaaS applications, legacy applications, or homegrown applications, and can be hosted on-premises or within a cloud computing environment. Connectors with out-of-the-box templates for several applications may be provided and integration with other applications may additionally or alternatively be configured through a microapp page builder. Such a microapp page builder may, for example, connect to legacy, on-premises, and SaaS systems by creating streamlined user workflows via microapp actions. The resource management services 402, and in particular the data integration provider service 432, may, for example, support REST API, JSON, OData-JSON, and 6ML. As explained in more detail below, the data integration provider service 432 may also write back to the systems of record, for example, using OAuth2 or a service account.

In some embodiments, the microapp service 430 may be a single-tenant service responsible for creating the microapps. The microapp service 430 may send raw events, pulled from the systems of record 428, to the analytics service 438 for processing. The microapp service may, for example, periodically pull active data from the systems of record 428.

In some embodiments, the active data cache service 436 may be single-tenant and may store all configuration information and microapp data. It may, for example, utilize a per-tenant database encryption key and per-tenant database credentials.

In some embodiments, the credential wallet service 434 may store encrypted service credentials for the systems of record 428 and user OAuth2 tokens.

In some embodiments, the data integration provider service 432 may interact with the systems of record 428 to decrypt end-user credentials and write back actions to the systems of record 428 under the identity of the end-user. The write-back actions may, for example, utilize a user's actual account to ensure all actions performed are compliant with data policies of the application or other resource being interacted with.

In some embodiments, the analytics service 438 may process the raw events received from the microapps service 430 to create targeted scored notifications and send such notifications to the notification service 440.

Finally, in some embodiments, the notification service 440 may process any notifications it receives from the analytics service 438. In some implementations, the notification service 440 may store the notifications in a database to be later served in a notification feed. In other embodiments, the notification service 440 may additionally or alternatively send the notifications out immediately to the client 202 as a push notification to the user 426.

In some embodiments, a process for synchronizing with the systems of record 428 and generating notifications may operate as follows. The microapp service 430 may retrieve encrypted service account credentials for the systems of record 428 from the credential wallet service 434 and request a sync with the data integration provider service 432. The data integration provider service 432 may then decrypt the service account credentials and use those credentials to retrieve data from the systems of record 428. The data integration provider service 432 may then stream the retrieved data to the microapp service 430. The microapp service 430 may store the received systems of record data in the active data cache service 436 and also send raw events to the analytics service 438. The analytics service 438 may create targeted scored notifications and send such notifications to the notification service 440. The notification service 440 may store the notifications in a database to be later served in a notification feed and/or may send the notifications out immediately to the client 202 as a push notification to the user 426.

In some embodiments, a process for processing a user-initiated action via a microapp may operate as follows. The client 202 may receive data from the microapp service 430 (via the client interface service 416) to render information corresponding to the microapp. The microapp service 430 may receive data from the active data cache service 436 to support that rendering. The user 426 may invoke an action from the microapp, causing the resource access application 424 to send that action to the microapp service 430 (via the client interface service 416). The microapp service 430 may then retrieve from the credential wallet service 434 an encrypted Oauth2 token for the system of record for which the action is to be invoked, and may send the action to the data integration provider service 432 together with the encrypted Oath2 token. The data integration provider service 432 may then decrypt the Oath2 token and write the action to the appropriate system of record under the identity of the user 426. The data integration provider service 432 may then read back changed data from the written-to system of record and send that changed data to the microapp service 430. The microapp service 432 may then update the active data cache service 436 with the updated data and cause a message to be sent to the resource access application 424 (via the client interface service 416) notifying the user 426 that the action was successfully completed.

In some embodiments, in addition to or in lieu of the functionality described above, the resource management services 402 may provide users the ability to search for relevant information across all files and applications. A simple keyword search may, for example, be used to find application resources, SaaS applications, desktops, files, etc. This functionality may enhance user productivity and efficiency as application and data sprawl is prevalent across all organizations.

In other embodiments, in addition to or in lieu of the functionality described above, the resource management services 402 may enable virtual assistance functionality that allows users to remain productive and take quick actions. Users may, for example, interact with the "Virtual Assistant" and ask questions such as "What is Bob Smith's phone number?" or "What absences are pending my approval?" The resource management services 402 may, for example, parse these requests and respond because they are integrated with multiple systems on the back-end. In some embodiments, users may be able to interact with the virtual assistance through either the resource access application 424 or directly from another resource, such as Microsoft Teams. This feature may allow employees to work efficiently, stay organized, and deliver only the specific information being sought.

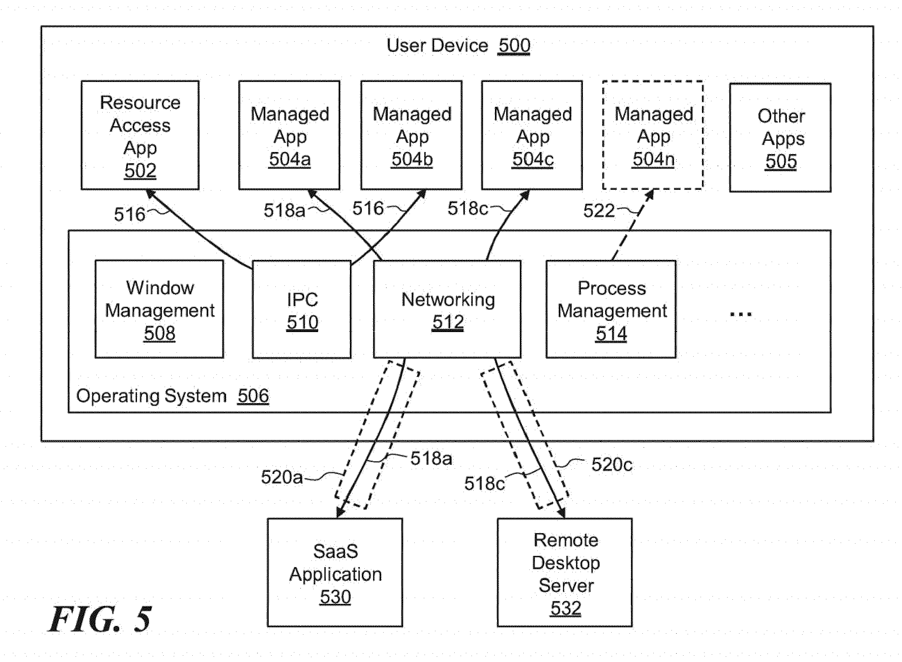

FIG. 5 illustrates a user device 500 operable to modify access to one or more applications, according to some embodiments. User device 500, which may be the same as or similar to client 202 of FIGS. 4B-4C, includes a resource access application 502, one or more managed applications 504a, 504b, 504c, etc. (504 generally), and an operating system (OS) 506. The illustrative OS 506 includes window management functions 508, inter-process communication (IPC) functions 510, networking functions 512, and process management functions 514. These OS functions shown in FIG. 5 are not intended to be complete depiction of the functions provided by an OS. The various OS functions 508-514 can be implemented within the OS's kernel (e.g., as modules, drivers, or built-in kernel functions) and/or in user space (e.g., as shared libraries). Applications 502, 504 can invoke or otherwise interface with the OS functions 508-514 using, for example, system calls, library function calls, or API calls. In other embodiments, one or more of the functions 508-514 shown as part of OS 506 can be implemented within libraries that are loaded into, or linked with, applications 502, 504. The user device 500 illustrated in FIG. 5 is not intended to be a complete representation of a user device. Embodiments of the present disclosure can be practiced with user devices having additional hardware and/or software components.

Managed applications 504 can include any applications that an organization provides or otherwise makes available to users associated with the organization so that the users can execute their assigned roles within the organization or otherwise provide some benefit to the organization. In many cases, managed applications be used to access information that is confidential to the organization. The term "managed application" as used herein is not limited to any particular type or category of application. Managed applications 504 can include native applications (e.g., MICROSOFT WORD), web-based applications (e.g., SALESFORCE and other SaaS applications), and virtual applications and desktops running on remote virtual desktop infrastructure. In the case of a web-based application, a managed application 504 can run inside a web browser, such as within a secure web browser provided by within resource access application 502. In the case of a virtual application/desktop, a managed application 504 can be accessed using a remote display client (or "engine") provided by resource access application 502. In the case of a native application, a managed application 504 can be installed on the user device 500 as mobile or desktop app separate and apart from resource access application 502. While three (3) managed applications 504a-c are shown in FIG. 5, disclosed embodiments can be used to modify access to arbitrary numbers of managed applications (and also, as discussed further below, to resource access application 502). As used herein, the term "application" generally refers to application processes (or "instances") that are running on a computing device and also to applications binaries (e.g., EXE files) that are executable by a computing device.

User device 500 can have installed on it both managed applications 504 and other applications 505. Other applications 500 can include, for example, applications that are bundled with the OS 506 such as the Calculator and Photos applications bundled with WINDOWS, applications that a user of the device 500 installed themselves for their personal use such as social media apps and streaming media apps, or any other applications not used to benefit the organization.

Managed applications 504 can communicate with remote systems, servers, and applications over one or more public and/or private computer networks. For example, as shown in FIG. 5, one managed application 504a can communicate with a SaaS application 540 via a network connection 518a, whereas another managed application 504c can communicate with a remote desktop server 532 via another network connection 518c.

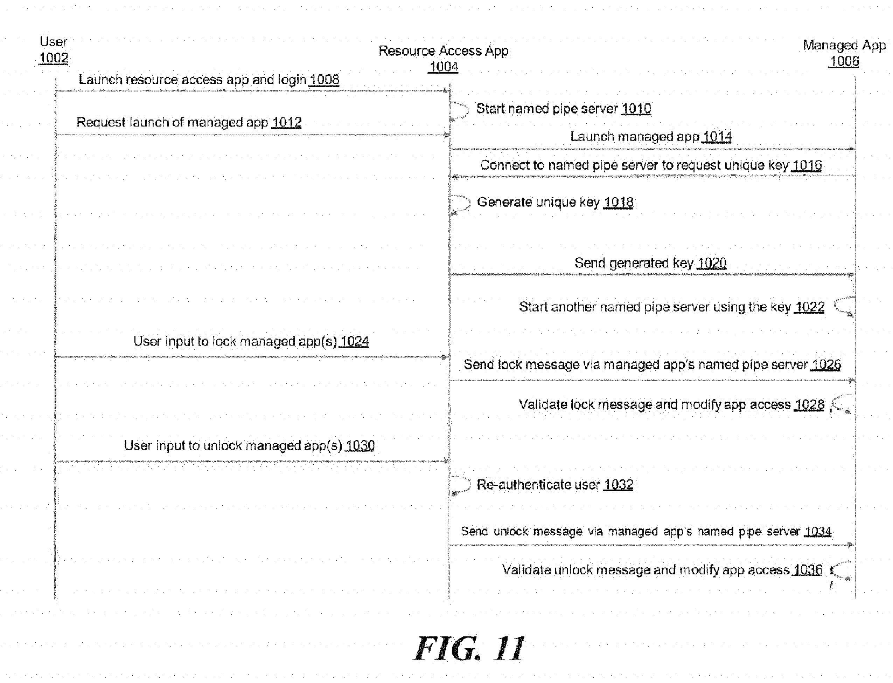

Resource access application 502, which may be the same as or similar to resource access application 424 of FIGS. 4B and 4C, can interact with managed applications 504 in various ways. For example, resource access application 502 can provide a UI for launching managed applications 504 in response to user inputs. As another example, resource access application 502 can use one or more IPC mechanisms to communicate with managed applications 504 via the OS's IPC functions 510. Non-limiting examples of IPC mechanisms that can be used include shared file access, sockets, signals, message queues, named pipes, shared memory, message passing, and memory-mapped files. In some embodiments, resource access application 502 can securely communicate with managed applications 504 using named pipes having paths that include uniquely generated keys, as discussed further below in the context of FIG. 11. In the example of FIG. 5, resource access application 502 is shown communicating with managed application 504b via a named pipe 516 or other IPC mechanism.

In some embodiments, a user can launch a managed application 504 from outside of resource access application 502, using a shell application such as WINDOWS EXPLORER, MACOS FINDER, a console/terminal application, or other graphical or text-based shell application. The shell application can be provided as part of OS 506 or as a third-party application. Disclosed embodiments can be used to modify access to applications launched by resource access application 502 and to applications launched outside of resource access application 502.

Resource access application 502 can modify access to managed applications 504 and/or itself to protect the organization's confidential data when an unauthenticated user (e.g., a technician or co-worker) is accessing the device 500. The structures and techniques described hereinbelow enable a user to protect the organization's confidential data on their device without having to save all their work and shutdown all managed applications running on the device.

Resource access application 502 can modify access to managed applications 504 and/or to itself in response various types of inputs. Access modification techniques described herein can be generally classified as techniques for locking applications or for unlocking applications. Applications can be locked and unlocked in response to various types of inputs. For example, a user may manually lock and unlock applications by clicking "Lock" and "Unlock" buttons within resource access application 502. As another example, applications can be locked/unlocked in response to messages received from a remote server, such as resource management service 402 of FIG. 4A-4C. In more detail, an employee or administrator for the organization may remotely lock/unlock user device 500 by sending a message from another device (e.g., a mobile device) to management service 402 which in turn sends a message to user device 500. As another example, applications can be locked/unlocked automatically in response to a threat assessment. Various assessment techniques that can be used in this regard are described below. Prior to unlocking applications, resource access application 502 may require that the user re-authenticate themselves by entering a PIN code or password, using facial recognition, completing multi-factor authentication, etc. In some embodiments, resource access application 502 can utilize an authentication mechanism provided by the OS 506, such as the CredUIPromptForCredentials function provided by WINDOWS.

As one example of a threat assessment technique that can be used to lock/unlock applications, resource access application 502 can monitor user inputs (e.g., keystrokes, mouse movements, or touch inputs) to detect that a person accessing the user device 500 is not an authenticated user. In more detail, resource access application 502 to access behavioral model(s) associated with one or more users that have authentication credentials on the device 500. When a particular user authenticates themselves with the device, resource access application 502 can begin capturing user inputs and comparing the inputs to the model to make a probabilistic determination whether the person using the device is the authenticated user or a different user (e.g., a technician, co-worker, etc.). Various techniques and metrics can be used to determine whether the person using the device is the authenticated user or a different user. For example, resource access application 502 can monitor keystrokes to calculate a user's average typing speed (e.g., in words-per-minute), average key-press duration, average duration between key presses, or rate of key rollover (i.e., multiple keys pressed at the same time), etc. As another example, resource access application 502 can monitor mouse movements to calculate, for example, average mouse pointer velocity. Such metrics can be calculated and stored an authenticated user of the device, and later used to determine of a person accessing the device presents a risk to the organization. In some embodiments, resource access application 502 can utilize machine learning (ML) models (e.g., neural networks) to process user input and make classifications or decisions based on a combination of the user inputs or features determined therefrom. If the captured user input is inconsistent with the authenticated user's behavior model, resource access application 502 can lock applications 502, 504 based on the assumption that an unauthenticated person is accessing the device 500. As another example of a threat assessment technique that can be used to automatically lock applications, resource access application 502 can use biometric data such as fingerprint scan data or facial recognition data to detect that a person accessing the user device 500 is not an authenticated user and, in response, to lock applications 502, 504.

In some embodiments, resource access application 502 can use one or more of the aforementioned threat assessment techniques to calculate a score (e.g., a risk score) indicating a likelihood that a person accessing the device 500 is an unauthenticated user and/or someone that is likely to pose a threat to the organization. If the score exceeds a certain threshold value, resource access application 502 can lock (e.g., automatically lock) applications 502, 504, while leaving other applications 505 unlocked. The threshold can be set by an organization as part of a security policy. The security policy can indicate which applications, or categories of applications, are to have their access modified when a threshold is exceeded. A security policy can define multiple different thresholds for different applications or categories of applications. In some embodiments, a resource management service (e.g., resource management service 402 of FIGS. 4A-4C) can provide a UI by which an administrator can configure the organization's security policy. The security policy can be transmitted from the resource management service to user device 500 where it can be enforced by resource access application 502. Resource access application 502, or resource management service 402, can calculate a score (e.g., a risk score) on a continuous or periodic basis. If the score subsequently falls below the threshold value, resource access application 502 can either unlock one or more managed applications without requiring the user to re-authenticate themselves or can allow the user to re-authenticate themselves on user device 500 to unlock managed applications (e.g., by presenting a password input or other authentication UI elements). In some embodiments, a security policy can dictate whether to lock applications on a single device (e.g., user device 500) or multiple devices associated with the same user in response to a threat assessment.

Several techniques for locking applications 504, 502 are described next. It should be understood that the systems and methods sought to be protected herein are not limited to any particular techniques for modifying access to applications and that multiple such techniques can be used in combination.

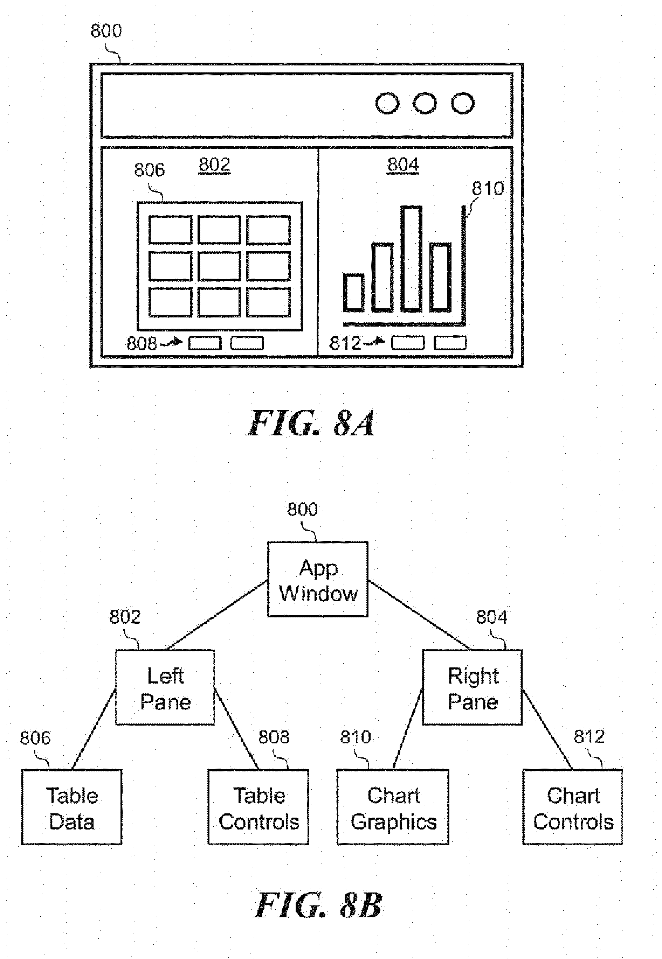

As one example of a locking technique, resource access application 502 can cause a window to be overlaid onto one or more managed applications 504 and/or onto resource access application 502 itself. The overlay window(s) may be configured in terms of size, position, color, opacity, etc. to prevent the contents of applications 504, 502 from being visible or otherwise discernable to users, thereby rendering them unusable. For example, the overlay windows can be opaque and can be sized and positioned to cover most or all of the application windows displayed by applications 504, 502. The overlay windows may be configured to block access to managed applications 504 and/or resource access application 502 while allowing other applications to remain accessible on user device 500. For example, on a WINDOWS device, the WINDOWS EXPLORER shell application may remain accessible while applications 504, 502 are blocked from view. In this way, a technician, co-worker, or other invited person can access the user device 500 but not the organization's applications or confidential data. The overlay windows can be created by resource access application 502 or by the managed applications 504 using the OS's window management functions 508, as described further below in the context of FIGS. 8A-H.

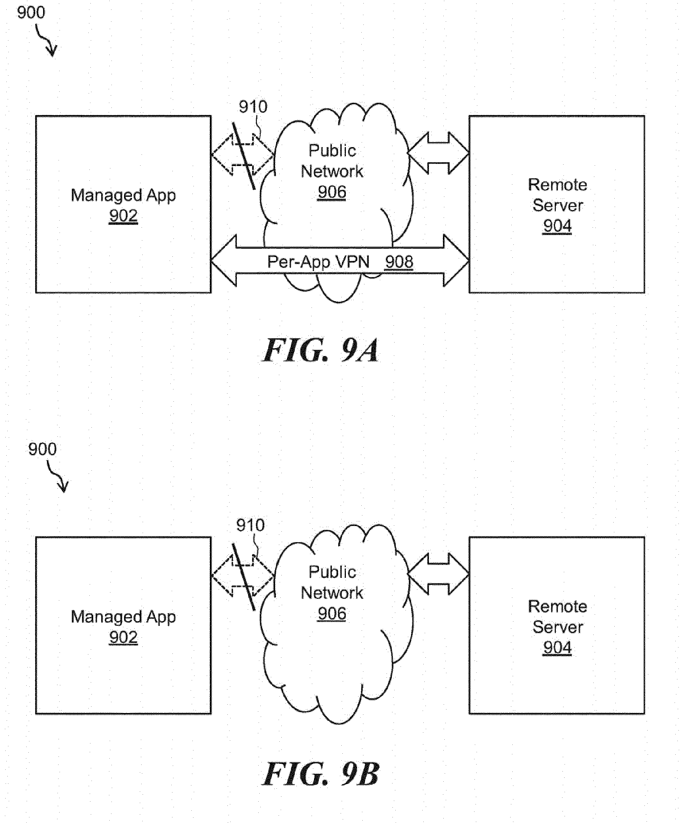

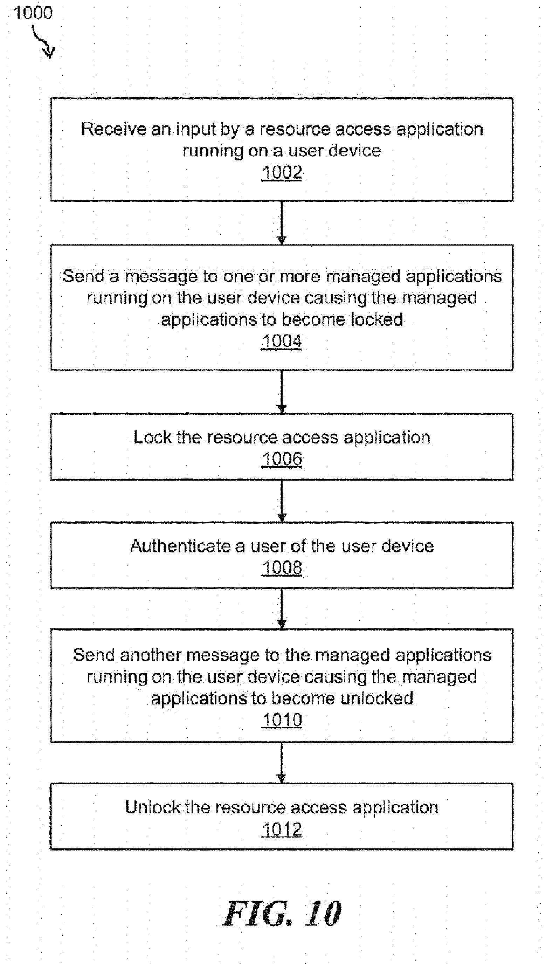

As another example of a locking technique, resource access application 502 can block network traffic to/from a managed application 504 (or to/from resource application 502 itself) to prevent confidential information from being accessed on the user device 500. As illustrated in FIG. 5, managed applications 504 may communicate with SaaS applications, remote desktops, and other external systems and services via network connections 518a, 518c. Network connections 518a, 518c can be secured using virtual private networks (VPNs) 520a, 520c established between the user device 500 and the external systems 530, 532. In some embodiments, a VPN can be established on a per-application basis, which provides more granular control over which data goes through VPN. In contrast, with device-wide VPN, any application can potentially pass traffic across the routes the VPN provides. This ability to segregate traffic at the application level allows the separation of personal data from organizational data. As a result, per-app VPN provides secure networking for managed applications while preserving the privacy of personal device activity. In the example of FIG. 5, managed application 504a establishes a per-app VPN 520a to communicate with SaaS application 530 and managed application 504c establishes a per-app VPN 520c to communicate with remote desktop server 532. The per-app VPN's can be established using the OS's networking functions 512. Resource access application 502 can cause per-app VPNs 520a, 520c to be disabled (or "torn down") in response to an input. This has the effect of preventing managed applications 504a, 504c from sending or receiving confidential data, rendering such network-based applications unusable until the per-app VPNs are re-established. Moreover, disabling a per-app VPN can prevent an application from starting, or may cause the application to run with certain features disabled (e.g., the user may be prevented from accessing data over the network), sometimes referred to as a "degraded state." Techniques and structures for blocking network traffic to/from a managed application are described further below in the context of FIGS. 9A, 9B, and 10.

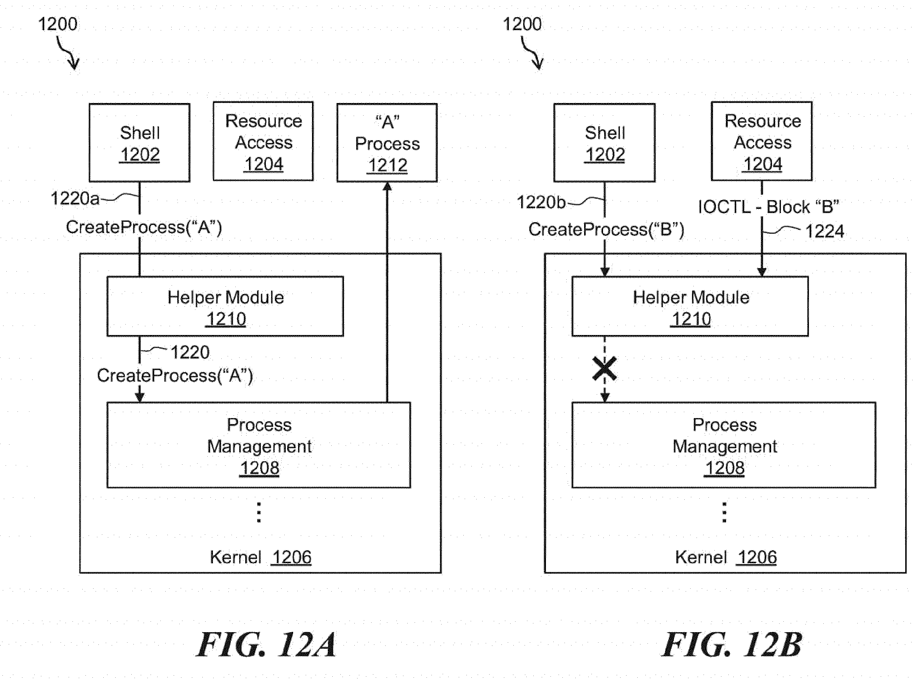

As another example of a locking technique, resource access application 502 can secure user device 500 by blocking the creation of managed application 504 processes. During normal operation, the OS's process management functions 514 can create new application processes in response to, for example, a user input. For example, as illustrated in FIG. 5, managed applications 504a-c may correspond to running application processes created by process management functions 514. On devices running the WINDOWS OS, an existing application process ("parent process") can use the CreateProcess() system call to create a new instance ("child process") of the same application or of a different application. On devices running a LINUX or UNIX OS, an existing process can use the fork() system call to create a child process and then, optionally, use the exec() system call to change the application associated with the child process. For convenience, the term "CreateProcess" is used herein to refer to any system call or other type of function that can be invoked to create a new application process on a user device and is not limited to such calls on WINDOWS or any other particular OS. Resource access application 502 can prevent instances of managed applications 504 from being created by loading a kernel module into the OS's kernel operable to intercept and block CreateProcess calls normally handled by the OS's process management functions 514. Techniques and structures for preventing managed applications from launching are described further below in the context of FIGS. 12A and 12B.

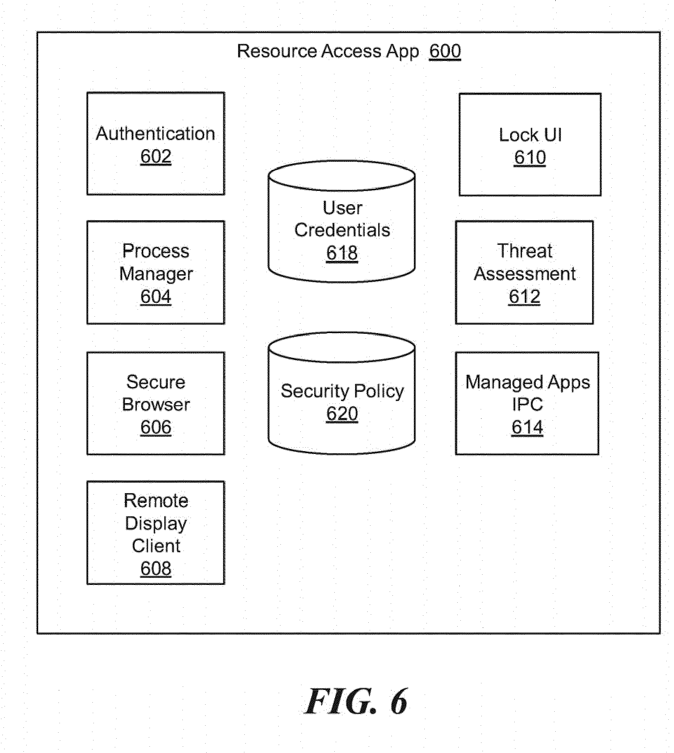

FIG. 6 shows portions of a resource access application 600 that can be provided on a user device, such as user device 500 of FIG. 5. The illustrative resource access application 600 includes an authentication module 602, a process manager 604, a secure browser 606, a remote display client 608, a lock UI module 610, a threat assessment module 612, and a managed applications IPC module 614. As used here, the terms "module" and "manager" both refer to computer hardware and/or software configured to perform the functions, operations, or sequence of operations described in conjunction therewith. Resource access application 600 can also store or otherwise have access to user credentials 618 and security policy 620 which can be used by one or more of the components 602-614 as described below. The resource access application 600 illustrated in FIG. 6 is not intended to be a complete representation of a resource access application and embodiments of the present disclosure can be practiced with resource access applications having additional features and components.

Authentication module 602 can authenticate users on the device using various authentication techniques such as PIN-based authentication, password-based authentication, facial recognition, or multi-factor authentication. Authentication module 602 compare a user input (e.g., a PIN or password entry) against user credentials 620 to make authentication determinations. In some embodiments, authentication module 602 may connect to a remote server to authenticate users. In some embodiments, authentication module 602 can use an authentication mechanism provided by the device's OS.

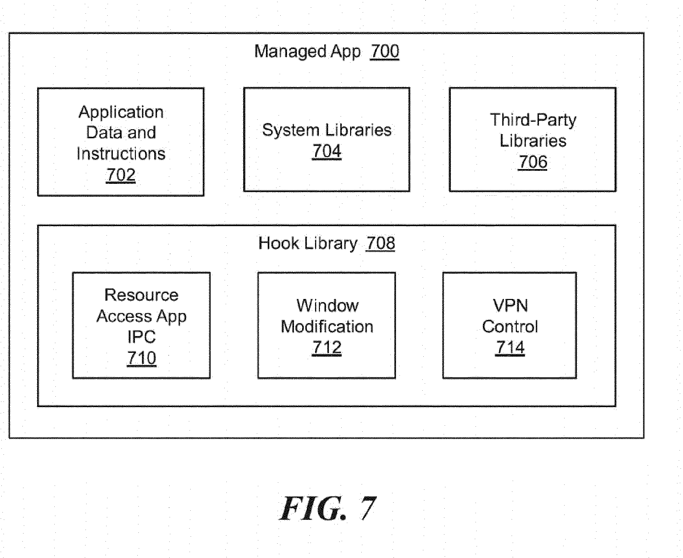

As previously mentioned, a resource access application can provide users with access to various types of applications including native applications (e.g., WINDOWS applications or mobile applications installed on the device), web-based applications, and virtual applications and desktops. Process manager 604 can launch native applications as child processes of the resource access application 600 and keep track of which native application processes are running. In some embodiments, process manager 604 can monitor and maintain a list of process identifiers (PIDs) for the native applications processes and use this information to modify access to said processes using IPC. Process manager 604 can also track any processes it creates for accessing web-based and virtual applications. In addition to tracking the process identifiers of running application processes, process manager 604 can keep track of unique keys generated for secure IPC with those processes, and the locked state of individual processes (e.g., locked vs. unlocked). In some embodiments, process manager 604 can cause native applications to run with a shared library loaded thereinto. The shared library (or "hook library") can include one or more functions that can be used to modify access to the applications, as discussed further below in the context of FIG. 7.

Secure browser 606 can include an embedded browser (e.g., a CHROMIUM-based browser) for launching SaaS applications and other web-based applications. Remote display client 608 can include an ICA (Independent Computing Architecture) client, RDP (Remote Desktop Protocol) client, or other remote display client for accessing virtual desktops and applications. In some embodiments, resource access application 600 can lock web-based applications running within secure browser 606 and virtual applications accessed via remote display client 608 by displaying an overlay window over resource access application 600 or portions thereof. As another example, resource access application 600 can selectively disable a per-app VPN used by secure browser 606 and/or remote display client 608.

Lock UI module 610 can include UI controls for modifying access to applications on the user device. For example, lock UI module 610 can display buttons or other controls for locking and unlocking applications on the device.

Threat assessment module 612 can calculate a score (e.g., a risk score) using various techniques disclosed herein and, based on the risk score and the organization's security policy, can cause applications on the device to be automatically locked. In some implementation, threat assessment module may receive the score or the action to lock/unlock from a resource management service (e.g., resource management service 402 of FIG. 4A-4C). Techniques for calculating and using scores are described above in the context of FIG. 5.

Managed applications IPC module 614 can include functions to securely communicate with managed applications via named pipes, sockets, shared memory, or another IPC mechanism. For example, as discussed further below in the context of FIG. 11, resource access application 600 can create a named pipe server using the IPC functions provided by the device's OS (e.g., IPC functions 510 of FIG. 5). A managed application can connect to the named pipe server to request a key (e.g., a unique key) from the resource access application 600 and then create another named pipe server using the key. Via the another named pipe server, resource access application can send instructions to the managed application to unlock and lock using techniques disclosed herein (e.g., display an overlay window or disabling a per-app VPN).

FIG. 7 shows portions of a managed application 700 that can run on a user device, such as user device 500 of FIG. 5. The illustrative managed application 700 includes application data and instructions 702 that implement that application's functionality, such as word processing, collaboration, sales management, etc. Managed application 700 can also include one or more libraries (e.g., DLLs) that can be statically or dynamically linked to, or loaded into, managed application 700. In the example of FIG. 7, managed application 700 includes system libraries 704, third-party libraries 706, and a hook library 708. System libraries can include libraries provided by the OS, such as window management functions, IPC functions, networking functions, and process management functions. Third-party libraries 706 can include any other libraries loaded into the managed application 700.

Hook library 708 includes one or more functions to enable locking and unlocking of the managed application 700 in response to inputs received by the user device. As previously discussed, a managed application 700 can correspond to a native application, a web-based application (e.g., a SaaS application), or a virtual application. For a web-based application, managed application 700 may run inside of a browser (e.g., a secure browser) provided by a resource access application (e.g., resource access application 516 of FIG. 5). In this case, hook library 708 can be loaded into the browser during compilation or installation of the resource access application on the device. Alternatively, the functions of hook library 708 may be included within the resource access application and used to modify access to web-based applications run within its browser. Similarly, for a virtual application, hook library 708 can be loaded into the remote display client within the resource access application or, alternatively, the functions of hook library can be used by the resource access application to modify access to the virtual application. A native application can be launched from the resource access application or from an outside application, such as WINDOWS EXPLORER or another shell application. If managed application 700 is a native application launched by the resource access application (i.e., a child process thereof), then the resource access application can dynamically load hook library 708 into the managed application when the child process is created.

As illustrated in FIG. 7, hook library 708 can include resource access application IPC functions 710, window modification functions 712, and VPN control functions 714. Resource access application IPC functions 710 can include functions to securely communicate with a resource access application running on the device via named pipes, sockets, shared memory, or another IPC mechanism. For example, as discussed further below in the context of FIG. 11, managed application 700 can connect to a named pipe server to request a key (e.g., a unique key) from the resource access application. Managed application 700 can then create another named pipe server having a path that includes the key via which resource access application can send messages to managed application 700 to lock and unlock itself. Window modification functions 712 can include functions to create an overlay window over managed application 700 or remove an existing overlay window in response to IPC messages received from the resource access application, as described further below in the context of FIGS. 8A-8H and 10. VPN control functions 714 is configured to disable and re-enable a per-app VPN used by managed application 700 in response to IPC messages received from the resource access application, as described further below in the context of FIGS. 9A, 9B, and 10.

The managed application 700 illustrated in FIG. 7 is not intended to be a complete representation of a managed application and embodiments of the present disclosure can be practiced with managed applications having additional features and components.

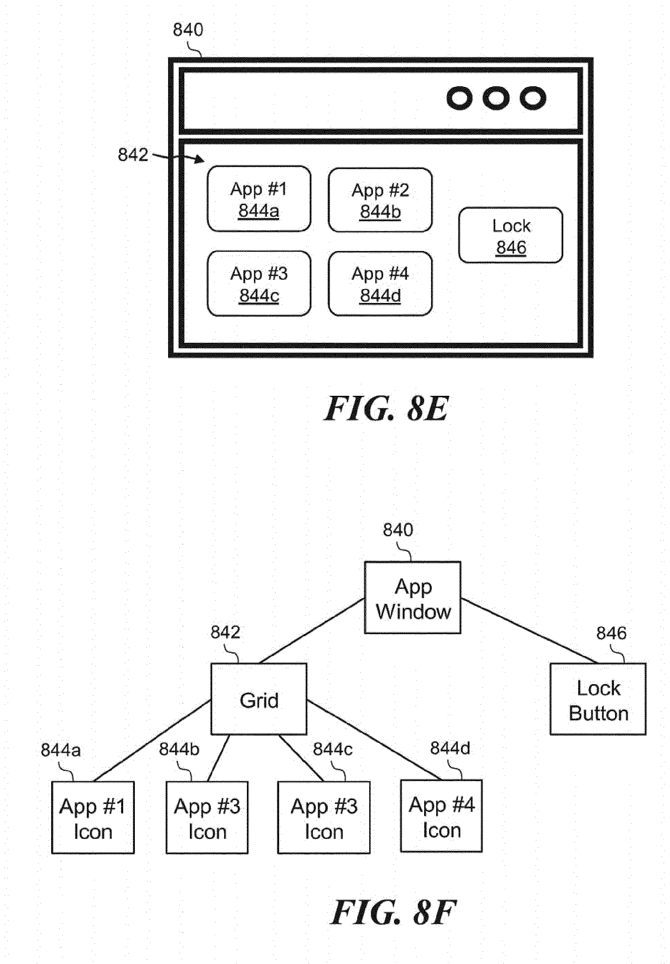

FIGS. 8A-H show techniques for modifying access to applications using an overlay window, according to disclosed embodiments. In particular, FIGS. 8A-D illustrate how an overlay window can be used to lock managed applications and FIGS. 8E-H illustrate how an overlay window can be used to lock a resource access application.

Referring to FIG. 8A, an illustrative application window 800 includes a left pane 802 and a right pane 804. The left pane 802 includes a table having table data 806 and table controls 808. The right pane 804 includes a chart having chart graphics 810 and chart controls 812. The application window 800 may correspond to a top-level window presented by a managed application, such as a managed application 504 in FIG. 5. The various UI elements 802-812 within application window 800 can be represented using a tree structure, as shown in FIG. 8B, wherein the application window 800 corresponds to the root node and UI elements 802-812 correspond to intermediate nodes and leaf nodes of the tree structure. In the case of a web-based application, the tree structure can correspond to a Document Object Model (DOM) within a web browser. In the case of a native application or virtual application, the tree structure can correspond to structure defined within a native GUI toolkit, such as MICROSOFT FOUNDATION CLASSES (MFC), WINDOWS TEMPLATE LIBRARY (WTL), WINDOWS FORMS, WINDOWS PRESENTATION FOUNDATION, UIKIT, GTK, QT, etc. Application window 800 is simplified example and is not intended to be a complete depiction of an application window that can be used within a managed application according to the present disclosure. In practice, an application window may include hundreds or thousands of UI elements.

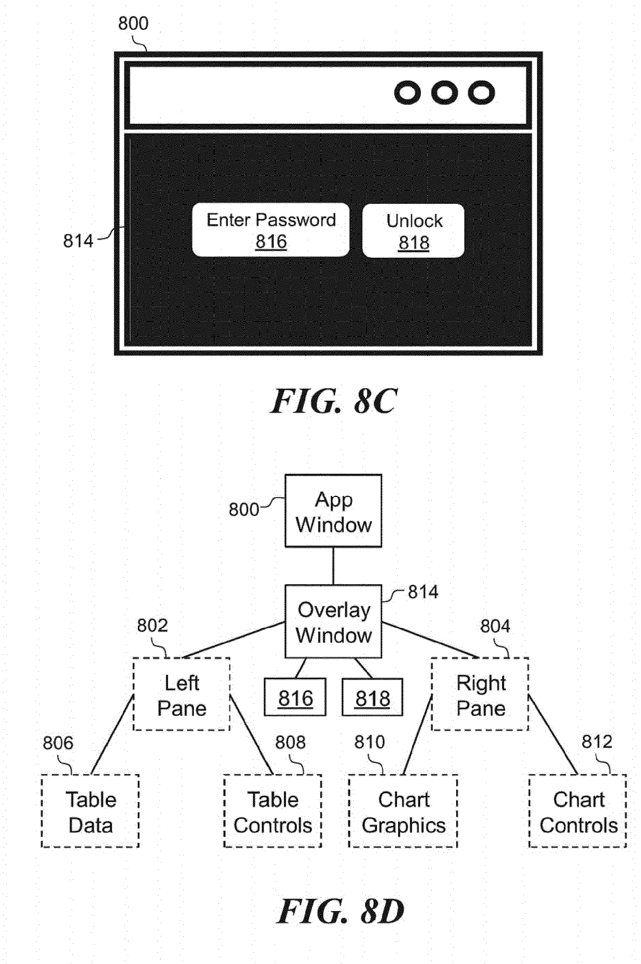

Turning to FIG. 8C, in response to an input, an overlay window 814 can be displayed over application window 800, or portions thereof, to prevent a user from accessing the managed application. Overlay window 814 can be substantially opaque and sized and positioned to block access to the managed application. In the example shown, overlay window 814 can prevent a user from accessing table data 806, table controls 808, chart graphics 810, and chart controls 812. In this manner, overlay window 814 can effectively lock the managed application such that the user cannot view or manipulate the organization's data normally accessible via the managed application. Overlay window 814 can be presented by the managed application in response to an IPC message sent by a resource access application. For example, the resource access application can send an IPC message via a named pipe server created by the managed application. The IPC message can be received and processed by a hook library loaded into the managed application, resulting in the creation and display of overlay window 814. As shown in FIG. 8D, in some embodiments, overlay window 814 can be inserted into the tree structure between the application window 800 (root node) and the UI elements 802-812. The manipulation of the application window's tree structure can be performed using window modification functions within the hook library, such as window modification functions 712 of FIG. 7.

In some embodiments, an overlay window need not leverage tree structure or other hierarchical structure and can instead be overlayed by adjusting the window or UI element attributes such as dimensions, location, z-order etc.

In some embodiments, one or more UI controls can be presented along with the overlay window 814. For example, as shown in FIG. 8C, a password input 816 and an unlock button 818 can be presented on top of the overlay window 814. Using these controls, a user can re-authenticate themselves and cause the managed application window 800 to become unlocked. As described below, separate UI controls can be presented within the resource access application to allow the user to unlock all managed applications at the same time.

Referring to FIGS. 8E and 8F, another application window 840 can correspond to a top-level window presented by a resource access application, such as resource access application 502 of FIG. 5. The simplified application window 840 includes a grid 842 having app icons 844a-d (844 generally) which a user can click/tap to launch or otherwise access the organization's managed applications. The application window 840 also includes a lock button 846 which the user can click/tap to lock the resource access application and one or more managed applications according to various techniques described herein. In practice, a resource access application can have many additional UI elements within its application window.

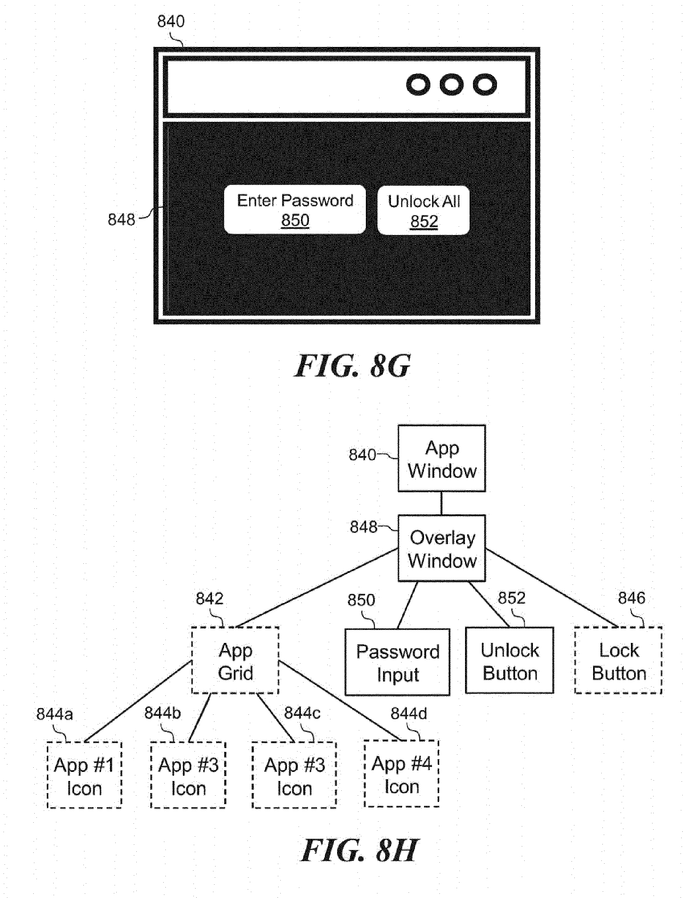

Turning to FIGS. 8G and 8H, in response to an input (e.g., the user clicking on lock button 846 or another input), an overlay window 848 can be displayed over application window 840, or portions thereof, to prevent a user from accessing the resource access application or particular features thereof. For example, overlay window 848 may block the user from launching managed applications using app icons 844. In this manner, overlay window 848 can effectively lock the resource access application such that the user cannot access any of the organization's data. In addition to displaying overlay window 848, the resource access application may send IPC messages to one or more managed applications (e.g., native applications on the same device) causing those managed applications to also display overlay windows and/or to disable their per-app VPNs. Along with overlay window 848, the resource access application can present one or more UI controls via which the user can authenticate themselves to unlock the resource access application. In the example shown, a password input 850 and an unlock button 852 ("Unlock All") are displayed along with the overlay window 848. In response to the user entering a password and clicking/tapping unlock button 852, the resource access application can authenticate the user (e.g., via authentication module 602 in FIG. 6). If the user is successfully authenticated, the resource access application can remove/hide overlay window 848 and controls 850, 852 and send IPC messages to one or more managed applications to cause those managed applications to unlock themselves (e.g., remove their overlay windows and/or re-establish their per-app VPNs). While password-based authentication is illustrated in FIGS. 8G and 8H, other authentication mechanisms can be used, including but not limited to PIN entry, facial or fingerprint recognition, or multi-factor authentication.

FIGS. 9A and 9B illustrate a technique for modifying access to an application that uses a per-app VPNs, according to disclosed embodiments. A simplified network environment 900 includes a managed application 902 and a remote server 904 communicatively coupled via one or more networks such as public network 906. The remote server 904 can correspond, for example, to a remote desktop server or a SaaS application server.

As shown in FIG. 9A, managed application 902 can communicate with the remote server 904 via a per-app VPN 908 which provides a secure communication path (or "tunnel") through public network 906. As illustrated by broken link 910, the managed application 902 may be prevented from communicating with the remote server 904 over the public network except through the per-app VPN 908. For example, a resource access application installed on the same user device as the managed application 902 can restrict which network interfaces the managed application is permitted to use and/or which endpoints the application is permitted to connect to. In response to an input, per-app VPN 908 can be disabled (or "torn down"), thereby preventing managed application 902 from communicating with remote server 904, as illustrated in FIG. 9B. In some embodiments, the resource access application may send an IPC message to managed application 902 and, in response, managed application 902 can disable the per-app VPN 908 (e.g., using VPN control functions within a hook library, such as VPN controls 714 of FIG. 7). In other embodiments, the resource access application can disable per-app VPN 908 directly using the OS's networking functions. When per-app VPN 508 is disabled, managed application 902 may be effectively unusable (i.e., locked) as it is unable to send/receive application-critical data to/from remote server 904. In some embodiments, disabling the per-app VPN 908 can prevent instances of managed application 902 from launching. Resource access application can send another IPC message to managed application 902 causing per-app VPN 908 to be re-established and allowing managed application 902 to communicate with remote server 904 and resume normal operation.

FIG. 10 shows a process 1000 for modifying access running applications, according to disclosed embodiments. For example, process 1000 can be used to lock one or more managed applications using the window overlay and/or per-app VPN techniques disclosed herein.

Before process 1000 is performed, a user may have authenticated themselves with the resource access application running on a user device (e.g., user device 500 of FIG. 5) and launched one or more managed applications via the resource access application. For example, the user may have launched web-based/SaaS applications, virtual applications, and/or a native applications running on the device. In the case of a native application, the resource access application can use the OS's CreateProcess function to create a new application process, with the resource access application being the parent owner of the new process. A hook library, such as hook library 708 of FIG. 7, can be loaded into one or more of the managed applications by the resource access application or statically linked to the managed applications (e.g., as part of a compilation or installation process). The resource access application can maintain of list of application processes that were launched from the resource access application. For example, as discussed above in the context of FIG. 6, process manager 604 within the resource access application can maintain a list of process identifiers for managed application processes launched by the resource access application. The resource access application can also track which web-based/SaaS applications are running within its secure browser and which native applications are running via its remote display client.

Referring now to FIG. 10, the process 1000 begins at block 1002, where an input is be received by the user device. The input can correspond to, for example, (1) a user clicking/tapping on a UI control (e.g., a "Lock" button) within the resource access application; (2) a message received from a remote server, such as resource management service 402; or (3) a threat assessment. Various assessment techniques that can be used in this regard are described above in the context of FIG. 5.

At block 1004, the resource access application sends a message to one or more managed applications to cause those applications to become locked. For example, the resource access application can send an IPC message (e.g., via a named pipe server) to one or more managed applications within the list of application processes maintained by the resource access application. The message may instruct the managed applications to lock themselves by, for example, creating overlay windows or disabling per-app VPNs as previously discussed. The messages can be received and processed by a hook library loaded into the managed applications. In the case of an overlay window, a managed application can also present UI controls (e.g., a password input and an "Unlock" button) to enable the user to authenticate themselves and unlock that individual application.

At block 1006, the resource access application can optionally lock itself by creating an overlay window. The resource access application's overlay window can be presented along with UI controls (e.g., a password input and an "Unlock All" button) to enable the user to authenticate themselves and unlock the resource access application and managed applications. In some embodiments, the resource access application may provide UI controls for unlocking individual managed applications.

At block 1008, the resource access application and/or individual managed applications can authenticate a user of the device. Various authentication techniques can be used, such as entering a PIN code, entering a password, using facial recognition, completing multi-factor authentication, etc. In some embodiments, the resource access application or managed application can invoke an authentication function provided by the OS, such as the CredUIPromptForCredentials function provided by WINDOWS.

At block 1010, the managed applications can be unlocked in response to a successful user authentication. In the case where the user chose to unlock all applications from the resource access application (e.g., by clicking the "Unlock All" button), the resource access application can send another IPC message to the managed applications instructing the managed applications to unlock themselves by, for example, remove their overlay windows or re-establishing their per-app VPNs. In the case where the user chose to unlock an individual application from the resource access application, the resource access application can send an IPC unlock message to that individual application. In the case where a user chose to unlock an individual managed application from within that application itself, the application can remove its overlay window or re-establish its per-app VPN directly in response to the user action.

At block 1012, the resource access application can optionally unlock itself in response to a successful user authentication, for example by removing its overlay window.

FIG. 11 shows an example of how a resource access application can securely communicate with a managed application using inter-process communication (IPC), according to disclosed embodiments. The example is illustrated by a series of interactions between a user 1002, a resource access application 1004, and a managed application 1006.

At line 1008, user 1002 launches resource access application 1004 and logs in using an authentication mechanism provided by the resource access application 1004. At 1010, resource access application 1004 starts a named pipe server using the OS's IPC functions. This named pipe server ("first named pipe server") may have a path (e.g., a predetermined path), such as \\pipe\resource-access-app. The path can be hardcoded within or otherwise known to both resource access application 1004 and managed application 1006. In some embodiments, the predetermined named pipe server path can be hardcoded within a hook library that is loaded into managed application 1006.

At line 1012, user 1002 performs an action to request launching of managed application 1006. For example, the user may click/tap on a corresponding app icon within resource access application 1004.

In response, at line 1014, resource access application 1004 launches the managed application 1006. In some embodiments, resource access application 1004 can use the OS's CreateProcess function to create a new application process, with the resource access application being the parent owner of the new process. Resource access application 1004 can obtain a process identifier or other unique identifier of the new process from the OS and store the process identifier in a list of running applications (e.g., in a list that it maintains).

At line 1016, managed application 1006 connects to the first named pipe server using the path and sends an IPC message to the resource access application 1004 requesting a unique key. The IPC message can include various information identifying the managed application process such as the managed application's process identifier, name, path, etc. In some embodiments, a hook library loaded into managed application 1006 is configured to automatically send this IPC message the managed application process starts.

At line 1018, resource access application 1004 generates a key (e.g., a unique key) for managed application 1006. The resource access application 1004 can store the key in the list of running processes, associated with managed application's process identifier. In some embodiments, resource access application 1004 can verify that the process identifier is included the IPC message (line 1016) matches one of the process identifiers in its list of running application process. In some embodiments, the process name, path, or other information describing the process can be used instead of the process identifier.

At line 1020, resource access application 1004 sends the key to managed application 1006 via the first named pipe server.

At line 1022, managed application 1006 starts another named pipe server ("second named pipe server") using the key received from resource access application 1004. In more detail, managed application 1006 constructs a path for the second named piper server that includes the key and, optionally, the managed application's process identifier. For example, the second named pipe server can have a path such as \ \pipe\managed-app-{processid}- {key}, where {processid} represents the managed application's process identifier and {key} represents the key shared between the resource access application 1004 and the managed application 1006.

At line 1024, user 1002 generates an input to lock one or more managed applications. For example, user 1002 can click a "Lock" button within resource access application 1004. Other types of inputs that can result in locking of applications are described above in the context of FIG. 5.

At line 1026, in response to the input, resource access application 1004 connects to the second named pipe server and sends an IPC message ("lock message") instructing managed application 1006 to lock itself. To connect to the second named pipe server, resource access application 1004 constructs the path (e.g., \\pipe\managed-app-{proce s s id} - {key}) using the key and process identifier stored in its list of running application. Resource access application 1004 can repeat this step for multiple managed applications to be locked.

At line 1028, managed application 1006 validates the lock message and performs one or more actions to modify access to the managed application. For example, if the lock message is valid, managed application 1006 (or, more particularly, a hook library loaded thereinto) can create an overlay window or disable a per-app VPN used by the managed application. Various techniques can be used to validate the lock message. For example, managed application 1006 can verify that the lock message was received from a known/trusted process such as resource access application 1004. As another example, managed application 1006 can validate the structure and content of the lock message and/or validate a sequence number of the message.

At line 1030, user 1002 generates another input to unlock one or more managed applications. For example, user 1002 can click an "Unlock All" button within resource access application 1004. In response, at line 1032, resource access application 1004 re-authenticates the user using any of the authentication techniques discussed herein.

At line 1034, in response to a successful user authentication, resource access application 1004 connects to the second named pipe server and sends an IPC message ("unlock message") instructing managed application 1006 to unlock itself. Resource access application 1004 can repeat this step for multiple managed applications to be unlocked.

At line 1036, managed application 1006 validates the unlock message and performs one or more actions to modify access to the managed application. For example, if the unlock message is valid, managed application 1006 (or, more particularly, a hook library loaded thereinto) can remove/hide an overlay window or re-establish the per-app VPN.

In other embodiments, managed application 1006 may not create a unique named pipe but instead utilize the named pipe server created by resource access application 1004 (e.g., at line 1010). For example, resource access application 1004 can use any IPC mechanism to signal to managed application 1006 (or, more particularly, to a hook library loaded therein) that a message is available. Managed application 1006 can then request the message from resource access application 1004 using its named pipe server. Resource access application 1004 can validate the request and, upon successful validation, can return a lock/unlock message to the managed application 1006.

FIGS. 12A and 12B illustrate portions of a user device 1200 operable to modify access to an application by preventing instances of the application from launching, according to some embodiments. User device 1200 includes a shell application 1202, a resource access application 1204, and a kernel 1206. Shell application 1202 enables a user to launch applications on the user device 1200 using a graphical or command-line interface. Non-limiting examples of shell applications include WINDOWS EXPLORER, MACOS FINDER, a console/terminal application, or other graphical or text-based shell application. Shell application can be provided by the device's OS or as a third-party application. Kernel 1206 corresponds to a part of the OS that provides various system-level functions such as IPC functions, networking functions, and processing management functions. For convenience, only processing management functions 1208 are shown in the example of FIGS. 12A and 12B. Kernel 1206 can be a modular, meaning that different kernel functions can be organized into different components called modules. Modules can provide core OS functionality (e.g., process management) in addition to custom and third-party modules (e.g., device drivers). Specific modules can be loaded into the kernel at device startup or dynamically thereafter. The loading and unloading of kernel modules may require administrative/root privileges.

In the example shown, a helper module 1210 may be distributed with resource access application 1204 to provide enhanced, system-level functionality that enables resource access application 1204 to modify access to managed applications on the device 1200. During installation of the resource access application 1204 by an administrator, helper module 1210 can be installed and configured to be loaded into the kernel 1206. According to some embodiments, helper module 1210 can be configured to selectively block (or "trap") CreateProcess calls normally handled by the kernel's process management functions 1208. Resource access application 1204 can configure helper module 1210 to block particular applications by sending a control message to helper module 1210 that includes a list of applications to be blocked. The control messages may be in the form of, for example, IOCTL (input/output control) messages. A control message can specify applications to block by name, binary path, image signature, or other application details known to resource access application 1204. For example, resource access application 1204 can maintain a list of managed applications installed on the user device 1200 and, in response to an input, can send a control message to helper module 1210 to block instances of those managed applications from launching. Resource access application 1204 can similarly send control messages to helper module 1210 to unblock applications.

Referring to FIG. 12A, shell application 1202 issues a CreateProcess call 1220a to launch an instance of application "A." Helper module 1210 intercepts or otherwise receives the CreateProcess call 1220a and determines that application "A" should not be blocked. Helper module 1210 therefore forwards or otherwise allows the CreateProcess call 1220a to be handled by process management functions 1208. As a result, a new application process 1212 is created.

Turning to FIG. 12B, resource access application 1204 sends a control message 1224 instructing helper module 1210 to block application "B" from launching. This can occur in response to a user clicking a "Lock" button within resource access application 1204 or another type of input described herein. As a result, a subsequent CreateProcess call 1220b to launch an instance of application "B" is blocked. In this example, application "B" may correspond to a managed application and application "A" may correspond to an application that is not associated with the organization. If a user subsequently provides an input to unlock the application and authenticates themselves with the device, resource access application 1204 can send another control message instructing helper module 1210 to allow instances of application "B" to launch.

While the example of FIGS. 12A and 12B show CreateProcess calls 1220a, 1220b issued by a shell application 1202, the structures and techniques disclosed herein can be used to block CreateProcess calls from any application, service, or component running on the user device 1200.

The disclosed structures and techniques for blocking CreateProcess call can be used alone or in combination with the other application locking techniques disclosed herein. For example, concurrent with sending control message 1224 to helper module 1210, resource access application 1204 can send IPC message to one or more running managed applications to cause those applications to lock themselves by displaying overlay windows and/or disabling per-app VPNs.

The following examples pertain to further embodiments, from which numerous permutations and configurations will be apparent.

Example 1 includes a method including: receiving an input by an application executable on a computing device, the application being presented in a first window displayable on the computing device and configured to provide access to another application, and the another application being displayable in a second window different than the first window; and providing by the application a message to the another application to modify access to content of the another application via the computing device in response to receipt of the input by the application, so as to prevent display of the content within the second window of the computing device.

Example 2 includes the subject matter of Example 1 and further includes modifying a display of the application within the first window to hide content of the application in response to receipt of the input.

Example 3 includes the subject matter of Example 1 and further includes detecting access to the computing device by a user not authenticated by the computing device, wherein the reception of the input by the application includes receiving a notification of the authenticated access.

Example 4 includes the subject matter of Example 3, wherein the detection of the access to the computing device includes analyzing a pattern of user behavior to identify the user.

Example 5 includes the subject matter of Example 3, wherein the detection of the access to the computing device includes using facial recognition to identify the user.

Example 6 includes the subject matter of Example 1, wherein the modification of access to content of the another application includes overlaying one or more windows on the another application.

Example 7 includes the subject matter of Example 1, wherein the modification of access to content of the another application includes disabling a virtual private network (VPN) connection used by the another application.

Example 8 includes the subject matter of Example 7, wherein the VPN connection is a per-app VPN connection used by the another application.

Example 9 includes the subject matter of Example 1, wherein the providing of the message to the another application includes sending an inter-process communication (IPC) message from the application to the another application.

Example 10 includes the subject matter of Example 9, and further includes: generating a key for the another application; creating a named pipe having a path that includes the key; and sending IPC messages to the another application via the named pipe.

Example 11 includes the subject matter of Example 1, and further includes: detecting access to the computing device by a user who is authenticated by the computing device; and allowing access to content of the another application in response to the detecting.

Example 12 includes the subject matter of Example 11, wherein the allowing access to content of the another application includes: providing by the application another message to the another application to allow access to content of the another application.

Example 13 includes a method including: receiving an input by an application executable on a computing device, the application being presented in a first window displayable on the computing device and configured to provide access to one or more other applications; and configuring, by the application, the computing device to prevent the one or more other applications from executing on the computing device in response to receipt of the input by the application, so as to prevent access to the one or more other applications.

Example 14 includes the subject matter of Example 13 and further includes detecting access to the computing device by a user not authenticated by the computing device, wherein the receipt of the input by the application includes receiving a notification of the authenticated access.

Example 15 includes the subject matter of Example 14, wherein the detection of the access to the computing device includes analyzing a pattern of user behavior to identify the user.

Example 16 includes the subject matter of Example 14, wherein the detection of the access to the computing device includes using facial recognition to identify the user.

Example 17 includes the subject matter of Example 13, wherein the configuration of the computing device to prevent the one or more other applications from executing includes intercepting a system call to create processes.

Example 18 includes the subject matter of Example 13, and further includes: detecting access to the computing device by a user who is authenticated by the computing device; and configuring, by the application, the computing device to allow the one or more other applications to execute on the computing device.

Example 19 includes an apparatus having a processor and a non-volatile memory storing computer program code. The computer program code, when executed on the processor, causes the processor to execute a process operable to: receive an input by an application executable on a computing device, the application being presented in a first window displayable on the computing device and configured to provide access to another application, and the another application being displayable in a second window different than the first window; and provide by the application a message to the another application to modify access to content of the another application via the computing device in response to receipt of the input by the application, so as prevent display of the content within the second window of the computing device.

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine-readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand-alone program or as a module, component, subroutine, or another unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described herein by operating on input data and generating output. The processes and logic flows can also be performed by, and apparatus of the subject matter described herein can be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processor of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of nonvolatile memory, including by ways of example semiconductor memory devices, such as EPROM, EEPROM, flash memory device, or magnetic disks. The processor and the memory can be supplemented by, or incorporated in, special purpose logic circuitry.

In the foregoing detailed description, various features are grouped together in one or more individual embodiments for the purpose of streamlining the disclosure. This method of disclosure is not to be interpreted as reflecting an intention that each claim requires more features than are expressly recited therein. Rather, inventive aspects may lie in less than all features of each disclosed embodiment.

## Claims

1. A method comprising:
receiving an input by an application executable on a computing device, the application being presented in a first window displayable on the computing device and configured to provide access to another application, and the another application being displayable in a second window different than the first window; and
providing by the application a message to the another application to modify access to content of the another application via the computing device in response to receipt of the input by the application, so as to prevent display of the content within the second window of the computing device.

2. The method of claim 1, further including modifying a display of the application within the first window to hide content of the application in response to receipt of the input.

3. The method of claim 1, wherein the modification of access to content of the another application includes overlaying one or more windows on the another application.

4. The method of claim 1, wherein the modification of access to content of the another application includes disabling a virtual private network, VPN, connection used by the another application.

5. The method of claim 4, wherein the VPN connection is a per-app VPN connection used by the another application.

6. The method of claim 1, wherein the providing of the message to the another application includes sending an inter-process communication, IPC, message from the application to the another application.

7. The method of claim 6, further including:
generating a key for the another application;
creating a named pipe having a path that includes the key; and
sending IPC messages to the another application via the named pipe.

8. The method of claim 1, further including:
detecting access to the computing device by a user who is authenticated by the computing device; and
allowing access to content of the another application in response to the detecting.

9. The method of claim 8, wherein the allowing access to content of the another application includes:
providing by the application another message to the another application to allow access to content of the another application.

10. A method comprising:
receiving an input by an application executable on a computing device, the application being presented in a first window displayable on the computing device and configured to provide access to one or more other applications; and
configuring, by the application, the computing device to prevent the one or more other applications from executing on the computing device in response to receipt of the input by the application, so as to prevent access to the one or more other applications.

11. The method of claim 1 or 10, further including detecting access to the computing device by a user not authenticated by the computing device, wherein the receipt of the input by the application includes receiving a notification of the authenticated access.

12. The method of claim 11, wherein the detection of the access to the computing device includes either: analyzing a pattern of user behavior to identify the user; or using facial recognition to identify the user.

13. The method of claim 10, wherein the configuration of the computing device to prevent the one or more other applications from executing includes intercepting a system call to create processes.

14. The method of claim 10, further including:
detecting access to the computing device by a user who is authenticated by the computing device; and
configuring, by the application, the computing device to allow the one or more other applications to execute on the computing device.

15. An apparatus comprising:
a processor; and
a non-volatile memory storing computer program code that when executed on the processor causes the processor to execute a process operable to:
receive an input by an application executable on a computing device, the application being presented in a first window displayable on the computing device and configured to provide access to another application, and the another application being displayable in a second window different than the first window; and
provide by the application a message to the another application to modify access to content of the another application via the computing device in response to receipt of the input by the application, so as prevent display of the content within the second window of the computing device.
